(19) Europäisches Patentamt / European Patent Office / Office européen des brevets

(11) EP 2 540 498 A1

(12) **EUROPEAN PATENT APPLICATION**
published in accordance with Art. 153(4) EPC

(43) Date of publication:
**02.01.2013 Bulletin 2013/01**

(21) Application number: **11747343.9**

(22) Date of filing: **22.02.2011**

(51) Int Cl.:
***B32B 27/30*** (2006.01) ***C08K 5/3435*** (2006.01)
***C08K 5/3492*** (2006.01) ***C08L 33/06*** (2006.01)

(86) International application number:
**PCT/JP2011/053867**

(87) International publication number:
**WO 2011/105382 (01.09.2011 Gazette 2011/35)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.02.2010 JP 2010037430**

(71) Applicant: **Asahi Glass Company, Limited**
**Tokyo 100-8405 (JP)**

(72) Inventors:
- **SHIBUYA, Takashi**
**Tokyo 100-8405 (JP)**
- **YAMAMOTO, Kyoko**
**Tokyo 100-8405 (JP)**

(74) Representative: **Müller-Boré & Partner Patentanwälte**
**Grafinger Straße 2**
**81671 München (DE)**

# (54) RESIN SUBSTRATE HAVING HARD COAT LAYER FORMED THEREON

(57) There is provided a resin substrate having a hard coating layer in which a silicone type hard coating layer is provided on the resin substrate via a primer layer, the resin substrate having the hard coating layer being excellent in the abrasion resistance and excellent in the weather resistance. A resin substrate having a hard coating layer comprising a primer layer containing an acrylic polymer, as a main component, and a hard coating layer formed of a cured product of a hard coating agent composition containing organo polysiloxane, sequentially laminated on at least one surface of the resin substrate, wherein the primer layer contains an acrylic polymer (A) in which at least one member selected from a specific alkyl acrylate and a specific alkyl methacrylate is set as main monomer units, a triazine type ultraviolet absorber (B), and a hindered amine photostabilizer (C).

FIG. 1

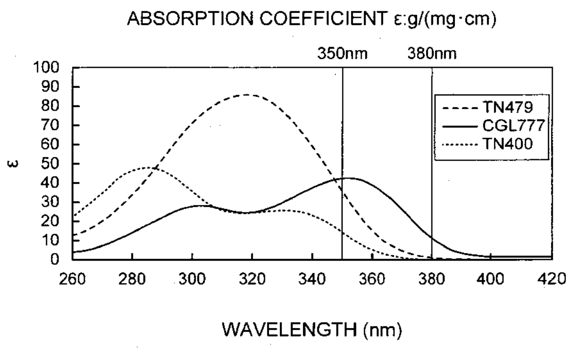


EP 2 540 498 A1

## Description

TECHNICAL FIELD

The present invention relates to a resin substrate having a hard coating layer with excellent weather resistance.

BACKGROUND ART

In recent years, as a window glass for a vehicle such as an automobile and a window glass for a building material to be attached to a building construction such as a house or a building, demands for a transparent resin plate are increasing instead of a conventional inorganic glass plate. Particularly, for a vehicle such as an automobile, for weight saving, use of a transparent resin plate as a window material has been proposed, and especially, an aromatic polycarbonate type transparent resin plate is excellent in fracture resistance, transparency, light weight properties, easy processability, and so on, and its use has been studied as a promising window material for a vehicle. However, such a transparent resin plate has a problem in view of the abrasion resistance and the weather resistance, when being used instead of a glass plate. Accordingly, for the purpose of improving the abrasion resistance and the weather resistance of the transparent resin plate, formation of a coating film (hard coating layer) on the surface of the transparent resin plate with the use of various hard coating agents, especially a silicone type hard coating agent to form a resin substrate having a hard coating layer, has been proposed. Further, when the coating film (hard coating layer) is formed on the transparent resin plate using the silicone type hard coating agent, use of a primer layer has been proposed to improve the adhesion between the hard coating layer and the transparent resin plate.

In order to sufficiently secure a further required weather resistance, there has been proposed to add an ultraviolet absorber to the silicone type hard coating agent in the resin substrate having the silicone type hard coating layer as above, but, when an addition amount of the ultraviolet absorber is increased to improve the weather resistance, there were problems that the hard coating layer becomes white, the ultraviolet absorber bleeds out, and so on. Therefore, there has been proposed to add the ultraviolet absorber to the above primer layer, which is an acrylic primer layer advantageous in the adhesion in particular, for the purpose of improving the weather resistance.

As examples of proposition as described above, Patent Reference 1 describes a technique in which a layer containing an acrylic resin having a weight average molecular weight of 150000 to 400000 and an ultraviolet absorber having a molecular weight per one hydroxy group in a molecule of 200 to 1000, is used as a primer layer, and Patent Reference 2 describes a technique in which a layer containing an acrylic resin, an ultraviolet absorber, a hindered amine photostabilizer, and a phosphorus type or lactone type processing and thermal stabilizer, is used as a primer layer, but, the realized weather resistance is about 5000 hours in a sunshine weather meter, and it cannot be said that the weather resistance is high enough in the particularly high weather resistance which has been required for an automobile and in the field of vehicles in recent years.

Meanwhile, there has been proposed a technique in which a transparent thermoplastic coating film containing an ultraviolet absorber is formed on a polycarbonate resin substrate to prevent discoloration of the polycarbonate resin substrate by ultraviolet rays and to improve the weather resistance.

As such proposition, for example, Patent Reference 3 describes a technique of multilayer product formed by laminating a polyalkyl (meth)acrylate layer containing biphenyl-substituted triazine as an ultraviolet absorber on a layer containing polycarbonate. Although a photolysis wavelength of ideal and flawless polycarbonate resin is 287 nm, an actually used polycarbonate resin is slightly deteriorated due to a thermal history in a manufacturing process or a molding process of the resin, so that there is absorption even in a wavelength of over 287 nm. For this reason, in order to realize high weather resistance, it becomes very important to shield not only ultraviolet rays with a relatively short wavelength of 280 to 320 nm called as UVB but also ultraviolet rays with a relatively long wavelength of 320 to 400 nm called as UVA, among ultraviolet rays. However, regarding the multilayer product disclosed in Patent Reference 3, although it has an ultraviolet absorption performance in a wavelength of 340 nm, its ultraviolet rays shielding performance over the entire UVA wavelength region cannot be said as sufficient. Further, since the above-described ultraviolet absorber is a compound having high crystallinity, there are problems such that a solubility into a solvent is low, and when a large amount of the ultraviolet absorber is compounded, it bleeds out.

Accordingly, development of a hard coating layer which can impart sufficient weather resistance to a transparent resin substrate made of a polycarbonate resin or the like promising as various window materials, particularly a window material for a vehicle, and which can maintain excellent properties such as transparency and fracture resistance for a long period of time, has been desired.

RELEVANT REFERENCES

Patent References

Patent Reference 1: JP-A 2005-28795 (KOKAI)
Patent Reference 2: JP-A 2005-59344 (KOKAI)
Patent Reference 3: JP-A 2008-535700 (KOHYO)

SUMMARY OF THE INVENTION

Problem to be Solved by the Invention

The present invention has been made to solve the problems of the prior art described above, and an object thereof is to provide a resin substrate having a hard coating layer in which a silicone type hard coating layer is provided on the resin substrate via a primer layer, the resin substrate having the hard coating layer being excellent in abrasion resistance and excellent in weather resistance.

Means for Solving the Problems

The present invention provides a resin substrate having a hard coating layer comprising a primer layer containing an acrylic polymer (A), as a main component, in which at least one member selected from an alkyl acrylate and an alkyl methacrylate is set as main monomer units, and further containing a triazine type ultraviolet absorber (B), and a hindered amine photostabilizer (C), and a hard coating layer formed of a cured product of a hard coating agent composition containing organo polysiloxane, sequentially laminated on at least one surface of the resin substrate, wherein the acrylic polymer (A) has an acid value of 1 mg KOH/g or less, a glass transition point of from 60°C to 150°C, and a weight average molecular weight of 200000 to 1000000, the average of absorption coefficients of the triazine type ultraviolet absorber (B) to light in a wavelength region of from 350 nm to 380 nm is from 20 g/(mg·cm) to 100 g/(mg·cm), and the amine moiety in the hindered amine photostabilizer (C) is capped with an alkyl group or an alkoxy group.

Here, in the present specification, a monomer selected from an alkyl acrylate and an alkyl methacrylate will be generically referred to as "an alkyl (meth)acrylate". Further, similarly, description of "a (meth)acryl·····" such as "a (meth) acryloyloxy group" means both of"an acryl·····" and "a methacryl·····".

Effect of the Invention

According to the present invention, a resin substrate having a silicone type hard coating layer excellent in the abrasion resistance and excellent in the weather resistance can be obtained.

BRIEF DESCRIPTION OF THE DRAWINGS

[FIG. 1] Fig. 1 is a graph illustrating absorption coefficients of one example of a triazine type ultraviolet absorber (B) applicable to the resin substrate having a hard coating layer of the present invention, and two examples of inappropriate triazine type ultraviolet absorbers at each wavelength.

BEST MODE FOR CARRYING OUR THE INVENTION

Embodiments of a resin substrate having a hard coating layer of the present invention will be described hereinafter.
The resin substrate having a hard coating layer of the present invention is a resin substrate having a hard coating layer formed by sequentially laminating, on at least one surface of the resin substrate to be described hereinafter, a primer layer containing an acrylic polymer as a main component (which is sometimes referred to as "acrylic primer layer", hereinafter), and a hard coating layer formed of a cured product of a hard coating agent composition containing organo polysiloxane (which is sometimes referred to as "silicone type hard coating layer", hereinafter).

(1) Resin Substrate

The resin as the material for the resin substrate used in the present invention, there can be cited a polycarbonate

resin, a polystyrene resin, an aromatic polyester resin, an acrylic resin, a polyester resin, a polyarylate resin, a polycondensation product of a halogenated bisphenol A and ethylene glycol, an acryl urethane resin, a halogenated aryl group-containing acrylic resin, or the like.

Among them, a polycarbonate resin such as an aromatic polycarbonate resin, or an acrylic resin such as a polymethyl methacrylate type acrylic resin, is preferable, and a polycarbonate resin is more preferable. Further, among polycarbonate resins, a bisphenol A type polycarbonate resin is particularly preferable. Note that the resin substrate may contain two or more types of the thermoplastic resins as described above, or may be a laminated substrate having two or more layers laminated by using these resins. Further, a shape of the resin substrate is not particularly limited, and it may be a flat plate or curved. Furthermore, the color tone of the resin substrate is preferably colorless and transparent or colored and transparent.

(2) Acrylic Primer Layer

The acrylic primer layer, provided to the resin substrate having a hard coating layer of the present invention, formed on at least one surface of the resin substrate, contains the following acrylic polymer (A) as a main component, and further contains a triazine type ultraviolet absorber (B), and a hindered amine photostabilizer (C).

(2-1) Acrylic Polymer (A)

In the resin substrate having a hard coating layer of the present invention, the acrylic polymer (A) contained, as a main component, in the acrylic primer layer is an acrylic polymer in which at least one member selected from an alkyl acrylate and an alkyl methacrylate is set as main monomer units, and having an acid value of 1 mg KOH/g or less, a glass transition point of from 60°C to 150°C, and a weight average molecular weight of from 200000 to 1000000.

The acid value of the acrylic polymer (A) used in the present invention is 1 mg KOH/g or less, and if the acid value exceeds 1 mg KOH/g, the acrylic primer deteriorates in an interface between the silicone type hard coating layer and the acrylic primer layer, resulting in that cracking occurs in early stages after performing a weather resistance test, which is a problem. Note that the acid value of the acrylic polymer (A) is preferably 0.8 mg KOH/g or less, and is more preferably 0 mg KOH/g. Here, the acid value is mg of potassium hydroxide required to neutralize a resin acid or the like in 1 g of a sample, and is a value capable of being measured in accordance with a measuring method of JIS K 0070.

The glass transition point (which is sometimes referred to as "Tg", hereinafter, as the case requires) of the acrylic polymer (A) used in the present invention is from 60°C to 150°C. If the glass transition point is less than 60°C, surface roughening or the like occurs on a surface of a primer layer to be obtained, and further, if it exceeds 150°C, smoothness of a surface of a primer layer to be obtained becomes insufficient, resulting in that there are problems on the surface of the primer layer even after laminating a silicone type hard coating layer on the primer layer, which is problematic in view of the outer appearance. Note that the glass transition point (Tg) of the acrylic polymer (A) is preferably from 70°C to 120°C, and is more preferably from 90°C to 110°C.

The acrylic polymer (A) used in the present invention is an acrylic polymer having an acid value and a glass transition point within the above ranges, and having a weight average molecular weight of from 200000 to 1000000. If the weight average molecular weight is smaller than 200000, white turbidity or the like occurs on a primer layer to be obtained, which is problematic in view of the outer appearance. Further, if the weight average molecular weight is larger than 1000000, the viscosity of a coating film composition (solution) used at the time of forming the coating film becomes high, resulting in that application of coating film composition onto the resin substrate becomes difficult. Further, the weight average molecular weight of the acrylic polymer (A) used in the present invention is preferably from 400000 to 1000000, and is more preferably from 420000 to 800000. Note that the weight average molecular weight is a value measured by gel permeation chromatography method using polystyrene as a standard substance. Hereinafter, the weight average molecular weight described in the present specification is a value measured by a method similar to the above measuring method.

As the acrylic polymer (A) used in the present invention, there can be cited one including a homopolymer or a copolymer which is obtained by polymerizing one or more members selected from various alkyl (meth)acrylates as the main monomer units and has the above properties. Here, the acrylic polymer having one or more members selected from alkyl (meth)acrylates "as the main monomer units" means that the total monomer units of one or more members selected from alkyl (meth)acrylates is from 90 to 100 mol% to the total monomer units constituting the acrylic, polymer, and the above ratio is preferably from 95 to 100 mol%. Hereinafter, in the present specification, "as the main monomer units" means the above meaning.

The number of carbon atoms in the alkyl group of the above alkyl (meth)acrylate is preferably 6 or less, and is more preferably 4 or less. Concretely, as alkyl (meth)acrylate, there can be cited methyl (meth)acrylate, ethyl (meth) acrylate, isopropyl (meth)acrylate, n-butyl (meth)acrylate, isobutyl (meth)acrylate, tert-butyl (meth)acrylate, and n-hexyl (meth)acrylate. As alkyl (meth)acrylate having an alkyl group having 7 or more carbon atoms, there can be cited 2-ethylhexyl (meth)acrylate, isononyl (meth)acrylate, and lauryl (meth)acrylate.

The acrylic polymer (A) used in the present invention is preferably a homopolymer having at least one member selected from alkyl (meth)acrylates having an alkyl group having 6 or less carbon atoms as the main monomer units or a copolymer of such monomers. Further, a copolymer of at least one alkyl (meth)acrylate having an alkyl group having 6 or less carbon atoms and at least one other (meth)acrylate is also preferable. The above other (meth)acrylate may, for example, be an alkyl (meth)acrylate having an alkyl group having 7 or more carbon atoms or a cycloalkyl (meth) acrylate. Further, a copolymer obtained by copolymerizing an alkyl (meth)acrylate with a (meth)acrylate having a small amount of functional groups (such as a hydroxyalkyl (meth)acrylate, for example) may also be used. If a monomer having an acidic group such as (meth)acrylic acid is copolymerized, the resulting acrylic polymer may have a high acid value, however, a copolymer having a small amount of a monomer having an acidic group copolymerized may also be used as long as the acid value is within the above range.

As the above-described cycloalkyl (meth)acrylate, there can be cited cyclohexyl (meth)acrylate, 4-methylcyclohexyl (meth)acrylate, 4-t-butylcyclohexyl (meth)acrylate, isobomyl (meth)acrylate, dicyclopentanyl (meth)acrylate and dicyclopentenyloxyethyl (meth)acrylate.

Among them, the acrylic polymer (A) used in the present invention is preferably a polymer obtained by polymerizing one or more members selected from alkyl methacrylates as the main monomer units. Further, it is preferably a homopolymer or a copolymer obtained by polymerizing one or more alkyl methacrylates having an alkyl group having 6 or less carbon atoms selected from methyl methacrylate (which is sometimes referred to as "MMA", hereinafter, as the case requires), n-butyl methacrylate, tert-butyl methacrylate, ethyl methacrylate, isobutyl methacrylate and the like as the main monomer units, and is more preferably a homopolymer of MMA, tert-butyl methacrylate, ethyl methacrylate or the like, or a copolymer of MMA with one or more members selected from n-butyl methacrylate, ethyl methacrylate and isobutyl methacrylate.

In the present invention, acrylic polymers having an acid value, a glass transition point and a weight average molecular weight within the above ranges can be used alone or as a mixture of two or more of them, as the acrylic polymer (A).

Such an acrylic polymer (A) having an acid value of 1 mg KOH/g or less, a glass transition point of from 60°C to 150°C, and a weight average molecular weight of from 200000 to 1000000 used in the present invention may be produced by using the above-described alkyl (meth)acrylate as the starting material monomer and as the case requires, together with a monomer other than the above exemplified alkyl (meth)acrylate, a molecular weight modifier, a polymerization initiator, a suspension stabilizer, an emulsifier, and the like, in an amount of less than 10 mol% to the total amount of the starting material monomer, by a conventional method of polymerizing an alkyl (meth)acrylate, for example, a polymerization method such as a solution polymerization method, a bulk polymerization method, a suspension polymerization method or an emulsion polymerization method.

Note that an acrylic polymer having an acid value, a glass transition point and a weight average molecular weight within the above ranges is commercially available, and such a commercial product can also be used as the acrylic polymer (A). As the commercial product, acrylic polymers presented in the following Table 1 can be cited, for example. Note that the column of acrylic polymer in the Table represents names of the starting material monomers and the proportion of such monomers in the raw material composition by mol%.

[Table 1]

| Trade name | Manufacturer | Acrylic polymer | | Weight average molecular weight (Mw) | Tg (°C) | Acid value [mgKOH/g] |
|---|---|---|---|---|---|---|
| | | Monomer I (mol%) | Monomer II (mol%) | | | |
| BR88 | MITSUBISHI RAYON CO., LTD. | MMA (100) | - | 430,000 | 105 | 1 or less |
| BR108 | MITSUBISHI RAYON CO., LTD. | MMA (90) | n-butyl methacrylate (10) | 550,000 | 90 | 0 |
| BR85 | MITSUBISHI RAYON CO., LTD. | MMA (100) | - | 280,000 | 105 | 0 |

The acrylic primer layer of the resin substrate having a hard coating layer of the present invention contains, as the main component, an acrylic polymer (A) having an acid value, a glass transition point and a weight average molecular weight within the above ranges, and further contains later-described triazine type ultraviolet absorber (B), hindered amine photostabilizer (C), and other optional components. In such an acrylic primer layer, the content of the acrylic polymer (A) having an acid value, a glass transition point and a weight average molecular weight within the above ranges is preferably from 50 to 97 mass%, and is more preferably from 70 to 95 mass% to the total amount of components constituting the acrylic primer layer.

If the content of the above acrylic polymer (A) is less than 50 mass% to the total amount of components constituting the acrylic primer layer, the polymer components tend to be too small, and physical properties of the acrylic primer layer may be deteriorated, and if it exceeds 97 mass%, the ultraviolet rays shielding performance of the acrylic primer layer may be insufficient.

(2-2) Triazine Type Ultraviolet Absorber (B)

The triazine type ultraviolet absorber (B) contained in the acrylic primer layer in the resin substrate having a hard coating layer of the present invention has absorption characteristics such that an average of absorption coefficients is from 20 g/(mg·cm) to 100 g/(mg·cm) to light in a wavelength region of from 350 nm to 380 nm.

In the resin substrate having a hard coating layer of the present invention, since the acrylic primer layer contains the triazine type ultraviolet absorber (B) having the above absorption characteristics, it is possible to efficiently shield ultraviolet rays in the UVA (from 320 to 400 nm) region, which is particularly required, in the shielding of ultraviolet rays, in a point of weather resistance, resulting in that a resin substrate having a hard coating layer with excellent weather resistance can be produced.

Here, in the present invention, the average of absorption coefficients in a wavelength region of from 350 to 380 nm means an average of absorption coefficients obtained at 1 nm intervals in the above wavelength region. Note that the absorption coefficient ε is a value obtained from the following relational expression, mathematical formula 1.

$$E = \varepsilon \cdot c \cdot d = \log(Io/I) \qquad \cdots\text{[Mathematical Formula 1]}$$

wherein E is the absorbance, ε is the absorption coefficient (g/(mg·cm)), c is the absorbing component concentration. (mg/g), d is the thickness of a cell (cm), Io is the incident light intensity, and I is the transmitted light intensity.

The triazine type ultraviolet absorber (B) contained in the acrylic primer layer in the resin substrate having a hard coating layer of the present invention is an ultraviolet absorber capable of absorbing ultraviolet rays in an ultraviolet region with a relatively long wavelength region of from 350 to 380 nm with an average of absorption coefficients within a range of from 20 g/(mg·cm) to 100 g/(mg·cm), among ultraviolet absorbers consisting of a compound having a triazine skeleton. If the average of absorption coefficients in a range of from 350 to 380 nm is smaller than 20 g/(mg·cm), an acrylic primer layer to be obtained cannot impart sufficient weather resistance to the resin substrate. Further, if it exceeds 100 g/(mg·cm), there is absorption even in the visible region, which results in coloring the acrylic primer layer. Note that the average of absorption coefficients in a range of from 350 to 380 nm of the above triazine type ultraviolet absorber (B) is preferably from 20 to 80 g/(mg·cm), and is more preferably from 20 to 50 g/(mg·cm).

It is possible to use, without particular limitation, the triazine type ultraviolet absorber (B) used in the present invention, as long as it is a triazine type ultraviolet absorber having the above absorption characteristics. For example, a triazine type ultraviolet absorber obtained in such a manner that to a compound having a triazine skeleton as a basic structure (skeleton), organic groups to be bonded to the skeleton are introduced by properly adjusting the species, the number, the position, and so on of the organic group so that the absorption characteristics of the obtainable compound are within a range applicable to the present invention, can be used without particular limitation. One of such ultraviolet absorbers may be used alone, or two or more of them may be used in combination.

In the triazine type ultraviolet absorber (B) used in the present invention, a molecular weight is also not particularly limited as long as it satisfies the above absorption characteristics. However, from a point of view of solubility, volatility and the like, the molecular weight of the used triazine type ultraviolet absorber (B) is preferably within a range of from 400 to 2000, and is more preferably within a range of from 500 to 1500, in a weight average molecular weight (Mw).

Concrete examples of the triazine type ultraviolet absorber (B) used in the present invention as described above are shown below together with the structural formula, absorption characteristics, the weight average molecular weight (Mw), and examples of a commercial product. Note that the absorption characteristics mean an average of absorption coefficients (unit: g/(mg·cm)) obtained at 1 nm intervals within a wavelength region of from 350 to 380 nm as the absorption coefficient ε (350-380) ave. Hereinafter, in the present specification, all of the terms of "absorption coefficient ε (350-380) ave" mean the above meaning.

2-[4-(4,6-Bis-{2-hydroxy-4-[1-(6-methyl-heptyloxycarbonyl)-ethoxy]-phenyl}-[1,3,5]tiazin-2-yl)-3-hydroxy-phenoxy]-propionic acid 6-methyl-heptyl ester, with structural formula represented by the following formula (B-1)(absorption coefficient ε (350-380) ave: 31.0, Mw: 958.2, commercial product: CGL777 (trade name, manufactured by Ciba Japan), etc.).

[Chemical Formula 1]

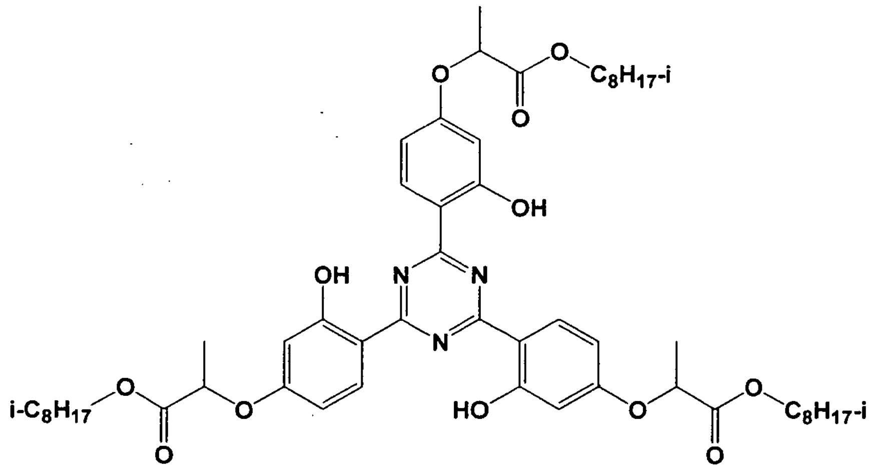

···(B−1)

2,4-bis[2-hydroxy-4-butoxyphenyl]-6-(2,4- dibutoxyphenyl)-1,3,5-triazine, with structural formula represented by the following formula (B-2) (absorption coefficient ε (350-380) ave: 37.0, Mw: 629.8, commercial product: TINUVIN 460 (trade name, manufactured by Ciba Japan), etc.).

[Chemical Formula 2]

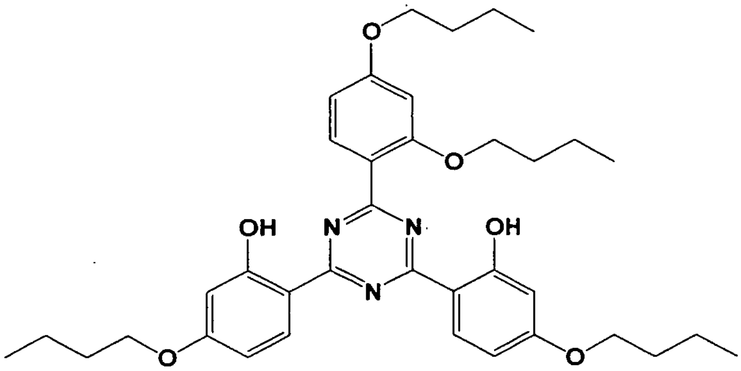

···(B−2)

In the resin substrate having a hard coating layer of the present invention, among these triazine type ultraviolet absorbers (B), 2-[4-(4,6-Bis-{2-hydroxy-4-[1-(6-methyl-heptyloxycarbony)-ethoxy]-phenyl}-[1,3,5]triazin-2-yl)-3-hydroxy-phenoxy]-propionic acid 6-methyl-heptyl ester (commercial product: CGL777, etc.) is preferably used.

As an example concretely illustrating ultraviolet absorption characteristics of a triazine type ultraviolet absorber (B) applicable to the resin substrate having a hard coating layer of the present invention, a graph of absorption coefficients of the following three triazine type ultraviolet absorbers, including inappropriate triazine type ultraviolet absorbers in the present invention, at each wavelength is shown in FIG. 1. FIG. 1 illustrates results of measurement of absorption coefficients of the above-described commercial product CGL777 (2-[4-(4,6-bis-{2-hydroxy-4-[1-(6-methyl-heptyloxycarbonyl)-ethoxy]-phenyl}-[1,3,5]triazin-2-yl)-3-hydroxy-phenoxy]-propi onic acid 6-methyl-heptyl ester), as a triazine type ultraviolet absorber (B) applicable to the present invention.

Further, as examples of inappropriate triazine type ultraviolet absorbers for the resin substrate having a hard coating layer of the present invention, FIG. 1 also illustrates a graph of absorption coefficients of TINUVIN 479 (trade name, manufactured by Ciba Japan, 2-[4-(4,6-bis-biphenyl-4-yl-[1,3,5]triazin-2-yl)-3-hydroxy-phenoxy]-propionic acid 6-methyl-heptyl ester, absorption coefficient ε (350-380) ave: 12.4, Mw: 677.8, represented as "TN479" in FIG. 1) classified into the biphenyl-substituted triazine type ultraviolet absorber described in the above-described Patent Reference

3, and absorption coefficients of a reaction product of a triazine type ultraviolet absorber used in a later-described comparative example TINUVIN 400 (trade name, manufactured by Ciba Japan, a reaction product of 2-(4,6-bis(2,4-dimethylphenyl)-1,3,5-triazin-2-yl)-5-hydroxyphenyl and oxirane, absorption coefficient ε (350-380) ave: 4.5, Mw: 647, represented as "TN400" in FIG. 1).

The acrylic primer layer of the resin substrate having a hard coating layer of the present invention contains at least one member selected from the above-described triazine type ultraviolet absorbers (B). The content of the above triazine type ultraviolet absorber (B) in the acrylic primer layer of the resin substrate having a hard coating layer of the present invention is preferably from 1 to 30 mass%, and is more preferably from 5 to 25 mass% to the total amount of components constituting the acrylic primer layer. If the content of the triazine type ultraviolet absorber (B) is less than 1 mass%, the weather resistance is insufficient in some cases, and if it exceeds 30 mass%, bleeding out of the triazine type ultraviolet absorber (B) or the like occurs in some cases.

(2-3) Hindered Amine Photostabilizer (C)

In the resin substrate having a hard coating layer of the present invention, the acrylic primer layer contains, in addition to the above-described acrylic polymer (A) and triazine type ultraviolet absorber (B), a hindered amine photostabilizer (C) in which an amine moiety is capped with an alkyl group or an alkoxy group.

The hindered amine photostabilizer is an additive for a polymeric material which is well known as a component that plays a role of imparting photostability by efficiently supplementing radical species on a member surface of a polymeric material on which photooxidation caused by ultraviolet rays intensively occurs. In the present invention, by using a low-basic hindered amine photostabilizer (C) in which an amine moiety is capped with an alkyl group or an alkoxy group, a reduction in molecular weight caused by the photooxidation of the acrylic polymer (A) being a main component of the acrylic primer layer is suppressed, and further, a partial decomposition by ultraviolet absorption of the triazine type ultraviolet absorber (B) is effectively suppressed, resulting in that high weather resistance is imparted to the resin substrate having a hard coating layer. Note that in the acrylic primer layer of the resin substrate having a hard coating layer of the present invention, the use of hindered amine photostabilizer with high basicity in which an amine moiety is not capped with an alkyl group or an alkoxy group, is not appropriate since hydrolysis may be accelerated.

Concretely, as such a hindered amine photostabilizer (C) used in the present invention, there can be cited a compound having a substituted piperidine skeleton represented by the following general formula (I): compound in which 1-position and 4-position of 2,2,6,6-tetramethylpiperidine skeleton are substituted by X and R, respectively.

[Chemical Formula 3]

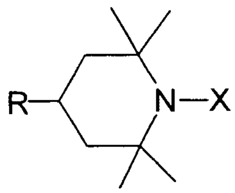

···(I)

(In the formula (I), X represents an alkyl group or an alkoxy group, and R represents a monovalent organic group.)

In the above general formula (I), as the alkyl group represented by X, straight-chain, branched or cyclic alkyl groups having from 1 to 8 carbon atoms can be concretely cited. Among the above, in the present invention, a straight-chain alkyl group having from 1 to 3 carbon atoms is more preferable, and a methyl group, an ethyl group or the like is particularly preferable. Further, in the above general formula (I), as the alkoxy group represented by X, straight-chain, branched or cyclic alkoxy groups having from 1 to 12 carbon atoms can be concretely cited. Among the above, in the present invention, a straight-chain alkoxy group or a cyclic alkoxy group having from 1 to 8 carbon atoms is more preferable, and a methoxy group, an octyloxy group, a cyclohexyloxy group or the like is particularly preferable.

In the above general formula (I), R represents the monovalent organic group, and concretely, there can be cited a group represented by the following formula (R-1), (R-2) or (R-3) or the like as R Further, there can be cited, as R, a part of a compound, obtained by excluding one substituted piperidine skeleton from the compound having one or more substituted piperidine skeletons formed by ester-bonded to at least one carboxylic acid of polyvalent carboxylic acid, for example, a compound represented by the following formula (I-4).

$-Y^1R^1-Y^2-R^2$ (R-1)

[Chemical Formula 4]

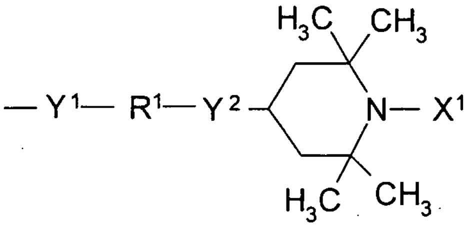

···(R−2)

[Chemical Formula 5]

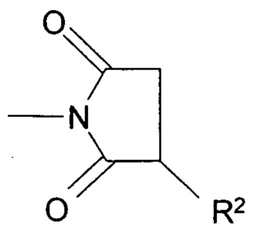

···(R−3)

In the above formulas (R-1) to (R-3), $Y^1$ and $Y^2$ mutually independently represent bivalent linkage groups. Concretely, $Y^1$ and $Y^2$ represent -COO-, -NH-, -NHCO- and the like, and a preferable linkage groups of both $Y^1$ and $Y^2$ are -COO-.

$X^1$ is similar to X in the above general formula (T).

$R^2$ represents a straight-chain, branched or cyclic alkyl group having from 1 to 20 carbon atoms. $R^2$ is preferably a straight-chain alkyl group having from 1 to 3 carbon atoms. $R^1$ represents a straight-chain or a branched bivalent hydrocarbon group which may have a double bond, an ether oxygen atom, and/or a cyclic structure in the middle thereof. Concretely, as $R^1$, there can be cited $-(CH_2)_n-$ (n represents an integer of from 1 to 20, and is preferably from 1 to 8), $>C=CH-Ph-OCH_3$ (Ph represents 1,2-, 1,3- or 1,4-phenylene group), a group represented by the following formula (Z) ($R^2$ is a straight-chain alkyl group having from 1 to 6 carbon atoms, and is preferably $n-C_4H_9$), or the like.

[Chemical Formula 6]

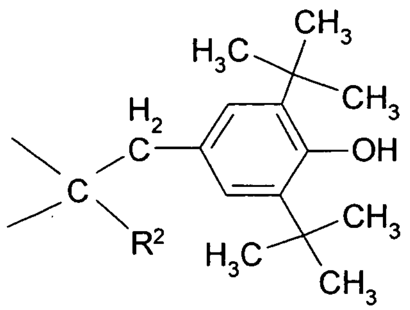

···(Z)

Further, as a concrete example of the hindered amine photostabilizer (C) formed by a combination of the above, a compound represented by the following general formula (I-1) (compound represented by the general formula (I) in which R is (R-1)), (I-2) (compound represented by the general formula (I) in which R is (R-2)), or (1-3) (compound represented by the general formula (1) in which R is (R-3)) can be cited.

[Chemical Formula 7]

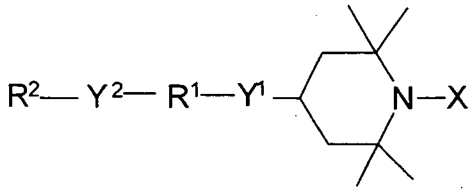

···(I-1)

[Chemical Formula 8]

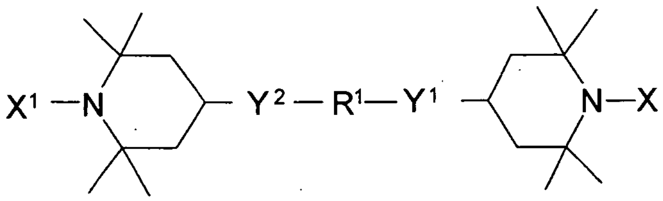

···(I-2)

[Chemical Formula 9]

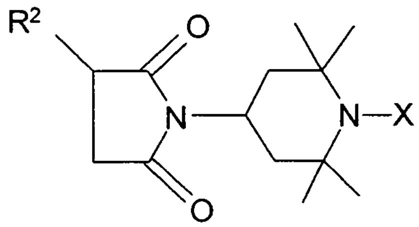

···(I-3)

As the hindered amine photostabilizer (C) used in the present invention, a compound represented by the following general formula (I-4) can also be used.

[Chemical Formula 10]

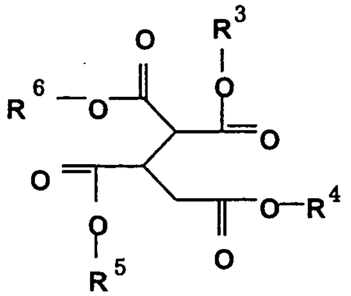

···(I-4)

(In the formula (I-4), from $R^3$ to $R^6$ respectively independently represent a group as a result of removing R from the compound represented by the above general formula (I) or a straight-chain, branched or cyclic alkyl group having from 1 to 20 carbon atoms. Note that any one of from $R^3$ to $R^6$ is a group as a result of removing R from the compound represented by the above general formula (I).)

Among the above, as the hindered amine photostabilizer (C) used in the present invention, the compound represented by the general formula (I-1), (1-2) or (I-4) is preferable.

Although a molecular weight of the hindered amine photostabilizer (C) used in the present invention is not particularly limited, it is preferably within a range of 400 or more, and is more preferably within a range of from 500 to 1000 in a weight average molecular weight (Mw), from a point of view of solubility, volatility and the like.

Concrete examples of such a hindered amine photostabilizer (C) represented by the above general formula (I)

will be described hereinbelow together with the weight average molecular weight (Mw) and examples of commercial product. There can be exemplified bis-(1,2,2,6,6-pentamethyl-4-piperidyl) sebacate (Mw: 508.8, commercial product: TINUVIN 765 (trade name, manufactured by Ciba Japan), etc.), bis-(1,2,2,6,6-pentamethyl-4-piperidyl)-2-(3,5-di-t-butyl-4- hydroxy-benzyl)-2-n-butylmalonate (Mw: 685.0, commercial product: TINUVIN 144 (trade name, manufactured by Ciba Japan), etc.), bis(2,2,6,6-tetramethyl-1-octyloxy-4-piperidyl) sebacate and a reaction product of 1,1-dimethylethylhydroperoxide and octane (Mw: 737.2, commercial product: TINUVIN 123 (trade name, manufactured by Ciba Japan), etc.), a mixture of bis(1,2,2,6,6-pentamethyl-4-piperidyl) sebacate and methyl(1,2,2,6,6-pentamethyl-4-piperidyl) sebacate (commercial product: TINUVIN 292 (trade name, manufactured by Ciba Japan), etc.), tetrakis(1,2,2,6,6-pentamethyl-4-piperidyl)-1,2,3,4-butane tetracarboxylate (Mw: 847.2, commercial product: Adekastab LA-52 (trade name, manufactured by ADEKA Corporation), etc.), 1,2,2,6,6-pentamethyl-4-piperidyl/tridecyl 1,2,3,4-butane tetracarboxylate (Mw: about 900, commercial product: Adekastab LA-62 (trade name, manufactured by ADEKA Corporation), etc.), and ester of 1,2,3,4-butane tetracarboxylic acid and, β,β,β’,β’-tetramethyl-3,9-diethyl-{2,4,8,10-tetraoxaspiro[5.5]undecane }-a,a’ -diol and 1,2,2,6,6-pentamethyl-4-piperidinol (commercial product: Adekastab LA-63 (trade name, manufactured by ADEKA Corporation), etc.).

Among the above, the following compounds can be cited as preferable hindered amine photostabilizer (C) described above used in the present invention.

Bis(2,2,6,6-tetramethyl-1-octyloxy-4-piperidyl) sebacate represented by the following formula (H-1), and the reaction product of 1,1-dimethylethylhydroperoxide and octane (commercial product: TINUVIN 123, etc.).

[Chemical Formula 11]

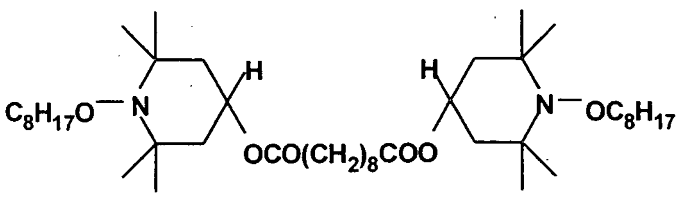

···(H−1)

The mixture of bis(1,2,2,6,6-pentamethyl-4- piperidyl) sebacate represented by the following formula (H-21) and methyl(1,2,2,6,6-pentamethyl-4-piperidyl) sebacate represented by the following formula (H-22) (commercial product: TINUVIN 292 (a mixture in which a mixing ratio between the former and the latter is about 75:25 in mass ratio), etc.).

[Chemical Formula 12]

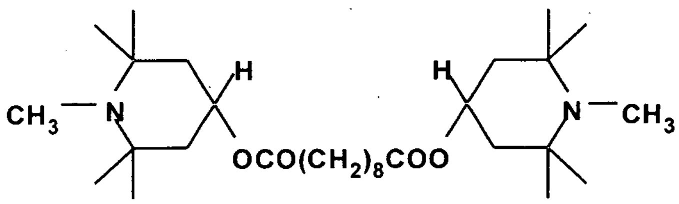

···(H−21)

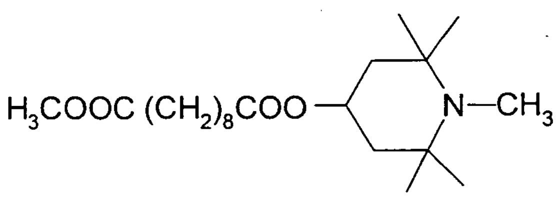

···(H−22)

1,2,2,6,6-pentamethyl-4-piperidyl/tridecyl 1,2,3,4-butane tetracarboxylate represented by the following formula (H-3) (commercial product: Adekastab LA-62 etc.).

[Chemical Formula 13]

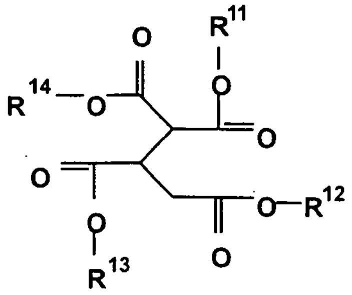

...(H-3)

[Chemical Formula 14]

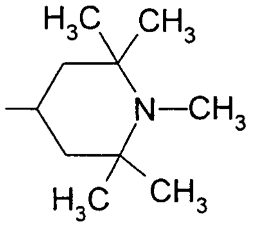

...(H)

(In the formula (H-3), from $R^{11}$ to $R^{14}$ respectively independently represent 1,2,2,6,6-pentamethyl-4-piperidyl group represented by the formula (H) or tridecyl group ($-C_{13}H_{27}$). Note that any one of from $R^{11}$ to $R^{14}$ is 1,2,2,6,6-pentamethyl-4-piperidyl group, and any one of them is tridecyl group.)

The acrylic primer layer of the resin substrate having a hard coating layer of the present invention contains at least one member selected from the above-described hindered amine photostabilizers (C). The content of the above hindered amine photostabilizer (C) in the acrylic primer layer of the resin substrate having a hard coating layer of the present invention is preferably from 0.1 to 5 mass%, and is more preferably from 0.1 to 3 mass% to the total amount of components constituting the acrylic primer layer. If the content of the hindered amine photostabilizer (C) is less than 0.1 mass%, the weather resistance is insufficient in some cases since inhibition of decomposition of the acrylic polymer (A) and the triazine type ultraviolet absorber (B) cannot be sufficiently conducted, and if it exceeds 5 mass%, bleeding out of the hindered amine photostabilizer (C) or the like occurs in some cases.

(2-4) Formation of Acrylic Primer Layer

The resin substrate having a hard coating layer of the present invention is formed such that the acrylic primer layer containing the above acrylic polymer (A) as a main component, and further containing the above triazine type ultraviolet absorber (B) and the above hindered amine photostabilizer (C), is formed on at least one surface of the above resin substrate, and a later-described silicone type hard coating layer is further laminated on a surface of the acrylic primer layer.

In order to form the acrylic primer layer on the above resin substrate, a conventional coating film formation method for forming the acrylic primer layer containing the acrylic polymer as the main component on the resin substrate may be applied. As a concrete method of forming an acrylic primer layer containing an acrylic polymer as the main component on a resin substrate, there can be cited a method in which a coating film composition containing acrylic primer layer constituting components (referred to as "acrylic primer composition", hereinafter) is prepared, a coating film comprising the coating film composition is formed on the resin substrate, followed by drying as the case requires, and the acrylic polymer as the main component is heat-cured.

The acrylic primer composition for forming the resin substrate having a hard coating layer of the present invention contains a predetermined amount of each of the above acrylic polymer (A), the triazine type ultraviolet absorber (B), and the hindered amine photostabilizer (C), and it may also contain an optional component in accordance with need, within a range not to impair the effects of the present invention.

Concretely, as such an optional component, there can be cited an additive such as a defoaming agent or a viscosity-adjusting agent used for the purpose of improving the coating properties, and an additive such as a leveling agent used for the purpose of improving the coating properties and the smoothness of the coating film to be obtained.

An amount of each of these additives to be compounded is preferably an amount of about from 0.1 to 5 mass% to the total amount of nonvolatile component (solid content other than solvent) of the acrylic primer composition.

The above acrylic primer composition used in the present invention normally contains a solvent other than the aforementioned respective essential components and optional component. The solvent contained in such an acrylic primer composition is not particularly limited as long as the predetermined amount of each of the above acrylic polymer (A), the triazine type ultraviolet absorber (B), and the hindered amine photostabilizer (C) can be stably dissolved

Concretely, as the solvent which can be used in the present invention, there can be cited a ketone derivative such as acetone, methyl ethyl ketone, methyl isobutyl ketone or cyclohexanone; an ether derivative such as tetrahydrofuran, 1,4-dioxane or 1,2-dimethoxyethane; an ester derivative such as ethyl acetate, n-butyl acetate or methoxyethyl acetate; an alcohol derivative such as methanol, ethanol, 1-propanol, 2-propanol, 1-butanol, 2-butanol, 2-methyl-1-propanol, 2-methoxyethanol, 4-methyl-2-pentanol, 2-butoxyethanol, 1-methoxy-2-propanol or diacetone alcohol; a hydrocarbon derivative such as n-hexane, n-heptane, isooctane, benzene, toluene, xylene, gasoline, light oil or kerosene; acetonitrile, nitromethane or water. They may be used alone or in combination of two or more of them.

In the present invention, the above solvent is preferably at least one member selected from n-butyl acetate, 1-methoxy-2-propanol and diacetone alcohol.

Further, the amount of the solvent to be used is preferably from 1 to 50 times, particularly preferably from 1 to 20 times by mass to the amount of the acrylic polymer. Note that the content of the nonvolatile component in the acrylic primer composition is preferably from 1 to 50 mass%, and is particularly preferably from 3 to 30 mass%.

The above respective components are combined and sufficiently mixed to form a uniform composition, to thereby obtain the above acrylic primer composition, which is then coated on the resin substrate. Although not particularly limited, as a method of coating, there can be cited a spray coating method, a dip coating method, a flow coating method or the like. A coating film formed of the acrylic primer composition is formed on the resin substrate in such a manner, followed by drying as the case requires such as preliminary drying under conditions where a temperature is from 20 to 50°C, a period of time is from 5 minutes to 10 hours and the like, and then the solvent is removed by heating to form the acrylic primer layer. The heating conditions are not particularly limited, but, the heating is preferably carried out at from 50 to 140°C for from 5 minutes to 3 hours.

A thickness of the acrylic primer layer formed as above is preferably not less than 0.5 μm and not more than 10 μm, and is particularly preferably not less than 3 μm nor more than 8 μm. If the thickness of the acrylic primer layer is less than 0.5 μm, the weather resistance is insufficient in some cases, and if it exceeds 10 μm, problems such as warpage of the resin substrate may occur.

(3) Silicone Type Hard Coating Layer

The resin substrate having a hard coating layer of the present invention is formed by further laminating, on a surface of the acrylic primer layer formed on at least one surface of the above resin substrate, a hard coating layer (silicone type hard coating layer) formed of a cured product of a hard coating agent composition containing organo polysiloxanes described below. Note that hereinafter, the hard coating agent composition containing the organo polysiloxanes is referred to as "silicone type hard coating agent composition".

The silicone type hard coating agent composition used in the present invention contains the organo polysiloxanes as an essential component, and further contains an optional component added according to need, within a range not to impair the effects of the present invention. Hereinafter, respective components contained in the silicone type hard coating agent composition used in the present invention will be described.

(3-1) Organo Polysiloxanes

Organo polysiloxanes contained in the silicone type hard coating agent composition used in the present invention are not particularly limited as long as they are curable organo polysiloxanes.

Organo polysiloxanes are composed of silicon-containing bond units called as M units, D units, T units or Q units. Among them, a curable organo polysiloxane is an oligomer-form polymer composed mainly of T units or Q units, and it may be a polymer composed solely of T units, a polymer composed solely of Q units, or a polymer composed of T units and Q units. Further, such polymers may further contain a small amount of M units or D units.

In curable organo polysiloxane, a T unit is a unit having one silicon atom, one hydrogen atom or monovalent organic group bonded to the silicon atom, and three oxygen atoms bonded to other silicon atoms (or functional groups which can be bonded to other silicon atoms). The monovalent organic group bonded to the silicon atom is a monovalent organic group in which the atom bonded to the silicon atom is a carbon atom. The functional groups which can be bonded to other silicon atoms are hydroxy groups or groups which can be converted to hydroxy groups by hydrolysis (referred to as hydrolyzable groups, hereinafter). The sum of the oxygen atoms bonded to other silicon atoms and the functional groups which can be bonded to other silicon atoms, is 3, and T units are classified into three types of units called as T1,

T2 and T3, depending on the difference in number of the oxygen atoms bonded to other silicon atoms and the functional groups which can be bonded to other silicon atoms. In T1, the number of oxygen atoms bonded to other silicon atoms is 1, in T2, the number of such oxygen atoms is 2, and in T3, the number of such oxygen atoms is 3. In the present specification, etc., an oxygen atom bonded to another silicon atom is represented by O*, and a monovalent functional group which can be bonded to another silicon atom is represented by Z.

Note that O* representing an oxygen atom bonded to another silicon atom, is an oxygen atom linking two silicon atoms and is an oxygen atom in a bond represented by Si-O-Si. Accordingly, one O* exists between silicon atoms of two silicon-containing bond units. In other words, O* represents an oxygen atom shared between two silicon atoms of two silicon-containing bond units. In the later-described chemical formula of the silicon-containing bond units, O* is represented as bonded to one silicon atom, but, this O* is an oxygen atom shared by a silicon atom of another silicon-containing bond unit and does not mean that two silicon-containing bond units are bonded by a bond represented by Si-O*-O*-Si.

The above-described M unit is a unit having three such organic groups and one O*, the D unit is a unit having two such organic groups and two O* (or one O* and one Z group), and the Q unit is a unit having no such an organic group and four O* (or a total of 4 i.e. from 1 to 3 O* and from 3 to 1 Z group). Each silicon-containing bond is formed from a compound having no oxygen atom (O*) bonded to another silicon atom (having only Z groups) (sometimes referred to as a monomer, hereinafter). A monomer to form a T unit will be referred to as a T monomer, hereinafter. A monomer to form an M unit, a D unit or a Q unit may likewise be referred to as an M monomer, a D monomer or a Q monomer.

The monomer is represented by $(R'-)_aSi(-Z)_{4-a}$. Note that a represents an integer of from 0 to 3, R' represents a hydrogen atom or a monovalent organic group, and Z represents hydroxy group or a monovalent functional group which can be bonded to another silicon atom. In this chemical formula, a compound in which a=3 is the M monomer, a compound in which a=2 is the D monomer, a compound in which a=1 is the T monomer, and a compound in which a=0 is the Q monomer. In the monomers, the Z group is usually a hydrolyzable group. Further, in a case where 2 or 3 R' are present (in a case where a is 2 or 3), a plurality of R' may be different. R' is preferably one within the same scope as a later-described preferred R.

A curable organo polysiloxane can be obtained by a reaction to convert some of Z groups in a monomer to O*. In a case where the organo polysiloxane is a copolymer including two or more silicon-containing bond units, such a copolymer is usually obtainable from a mixture of the respectively corresponding monomers. In a case where Z groups in a monomer are hydrolyzable groups, the Z groups are converted to hydroxy groups by a hydrolysis reaction, and then, by a dehydration condensation reaction between two hydroxy groups bonded to separate silicon atoms, the two silicon atoms will be linked via an oxygen atom (O*). In the curable organo polysiloxane, hydroxy groups (or non-hydrolyzed Z groups) remain, and at the time of curing of such a curable organo polysiloxane, such hydroxy groups or Z groups are reacted in the same manner as described above, for curing. The cured product of the curable organo polysiloxane is a three dimensionally crosslinked polymer, and a cured product of a curable organo polysiloxane having many T units or Q units becomes a cured product having a high crosslink density. At the time of curing, Z groups of a curable organo polysiloxane are converted to O*, but, it is considered that some of Z groups (particularly hydroxy groups) will remain, so that the cured product will have hydroxy groups. In a case where a curable organo polysiloxane is cured at a high temperature, there may be a case where no substantial hydroxy groups will remain in the cured product.

In a case where Z groups in a monomer are hydrolyzable groups, such Z groups may be alkoxy groups, chlorine atoms, acyloxy groups, isocyanate groups or the like. In many cases, as a monomer, a monomer in which Z groups are alkoxy groups, is used. Alkoxy groups are hydrolyzable groups having a relatively low reactivity as compared with chlorine atoms and the like, and in a curable organo polysiloxane obtainable by using a monomer in which Z groups are alkoxy groups, unreacted alkoxy groups are present together with hydroxy groups, as Z groups, in many cases. In a case where Z groups in a monomer are hydrolyzable groups having a relatively high reactivity (such as chlorine atoms), most of Z groups in a curable organo polysiloxane obtainable by using such a monomer become hydroxy groups. Therefore, in a usual curable organo polysiloxane, Z groups in the respective units constituting it are hydroxy groups, or hydroxy groups and alkoxy groups, in many cases.

Further, in the present invention, among these curable ograno polysiloxanes, a curable ograno polysiloxane composed of T units as main silicon-containing bond units, is preferably used. Hereinafter, a curable ograno polysiloxane is simply referred to as an ograno polysiloxane, unless particularly mentioned. Here, in the present specification, an ograno polysiloxane having T units as main constitutional units (hereinafter, referred to as "an organo polysiloxane (T)" according to need) corresponds to an organo polysiloxane in which the proportion in number of T units is from 50 to 100% to the total number of M units, D units, T units and Q units, and in the present invention, an organo polysiloxane in which the proportion in number of T units is from 70 to 100% is preferably used, and an organo polysiloxane in which the proportion in number of T units is from 90 to 100% is particularly preferably used. Further, as other units contained in a small amount other than the T units, D units and Q units are preferred, and Q units are particularly preferred.

Specifically, in the present invention, among these curable organo polysiloxanes, an organo polysiloxane composed solely of T units and Q units in which the ratio of the number of the units is T:Q = from 70 to 100:from 30 to 0, is

particularly preferably used.
Note that the proportions in number of M units, D units, T units and Q units in an organo polysiloxane can be calculated from values of peak area ratios by $^{29}$Si-NMR

A weight average molecular weight of the organo polysiloxane (T) used in the present invention is preferably from 500 to 10000, and is more preferably from 500 to 8000. When the weight average molecular weight of the organo polysiloxane is within the range, initial cracking caused by a shrinkage stress due to a curing shrinkage is difficult to occur.

The organo polysiloxane (T) is preferably produced from at least one type of T monomers represented by R-Si(-OY)$_3$. In this formula, R is the same as the above-described R, and Y represents an alkyl group having from 1 to 6 carbon atoms. Y may be not only an unsubstituted alkyl group but also a substituted alkyl group such as an alkoxy-substituted alkyl group. Three Y in one molecule may be different. However, the three Y are usually the same alkyl group. Y is preferably an alkyl group having from 1 to 4 carbon atoms, more preferably 1 or 2 carbon atoms. Concretely, as Y, there can be cited a methyl group, an ethyl group, a n-propyl group, a n-butyl group, a t-butyl group, a 2-methoxyethyl group or the like.

R is a hydrogen atom or a substituted or unsubstituted monovalent organic group having from 1 to 10 carbon atoms. The organic group is meant for an organic group in which atoms bonded to silicon atoms are carbon atoms, as described above.

As the unsubstituted monovalent organic group, there can be cited a hydrocarbon group such as an alkyl group, an alkenyl group, an alkynyl group, a cycloalkyl group, an aryl group or an aralkyl group. Such a hydrocarbon group is preferably an alkyl group having from 1 to 10 carbon atoms, an alkenyl group or an alkynyl group having from 2 to 10 carbon atoms, a cycloalkyl group having 5 or 6 carbon atoms, an aryl group having from 6 to 10 carbon atoms, or an aralkyl group having from 7 to 10 carbon atoms. Concretely, a methyl group, an ethyl group, a n-propyl group, a n-butyl group, an i-butyl group, a t-butyl group, a hexyl group, an octyl group, a decyl group, a vinyl group, an allyl group, a cyclohexyl group, a phenyl group, a benzyl group, a phenethyl group, or the like can be cited.

As the substituted monovalent organic group, there are a hydrocarbon group having a hydrogen atom of a ring of a cycloalkyl group, an aryl group, an aralkyl group or the like substituted by an alkyl group, or a substituted organic group having a hydrogen atom of the above-mentioned hydrocarbon group substituted by a halogen atom, a functional group, a functional group-containing organic group or the like. As the functional group, a hydroxy group, a mercapto group, a carboxy group, an epoxy group, an amino group, a cyano group or the like is preferred. As a halogen atom-substituted organic group, an alkyl group having a chlorine atom or a fluorine atom, such as a chloroalkyl group or a polyfluoroalkyl group, is preferred. As the functional group-containing organic group, an alkoxy group, an acyl group, an acyloxy group, an alkoxycarbonyl group, a glycidyl group, an epoxycyclohexyl group, an alkylamino group, a dialkylamino group, an arylamino group, an N-aminoalkyl-substituted aminoalkyl group or the like is preferred. Particularly preferred is a chlorine atom, a mercapto group, an epoxy group, an amino group, an acryloyloxy group, a methacryloyloxy group, a glycidyl group, an alkylamino group, an N-aminoalkyl-substituted aminoalkyl group or the like. A T monomer having a substituted organic group which is substituted by a functional group, a functional group-containing organic group or the like, includes a compound in a category called as a silane coupling agent.

As concrete examples of the substituted organic group, the following organic groups can be cited: a 3-chloropropyl group, a 3,3,3-trifluoropropyl group, a 3-mercaptopropyl group, a p-mercaptomethylphenylethyl group, a 3-acryloyloxypropyl group, a 3-methacryloyloxypropyl group, a 3-glycidoxypropyl group, a 2-(3,4-epoxycyclohexyl)ethyl group, a 3-aminopropyl group, an N-phenyl-3-aminopropyl group, an N-(2-aminoethyl)-3-aminopropyl group, and a 2-cyanoethyl group.

As the above R, a particularly preferred monovalent organic group is an alkyl group having from 1 to 4 carbon atoms. The organo polysiloxane (T) is preferably an organo polysiloxane which is obtainable by using one or more of T monomers each having an alkyl group having from 1 to 4 carbon atoms. Further, the organo polysiloxane (T) is also preferably an organo polysiloxane which is obtainable by using at least one T monomers each having an alkyl group having from 1 to 4 carbon atoms and a small amount of another T monomer. The proportion of such another T monomer is preferably 30 mol% or less, and is particularly preferably 15 mol% or less, to the total amount of T monomers. As such another T monomer, preferred is a T monomer having a substituted organic group which is substituted by a functional group or a functional group-containing organic group, in a category called as a silane coupling agent.

As concrete examples of a T monomer having an alkyl group having from 1 to 4 carbon atoms, there can be cited, for example, methyltrimethoxysilane, methyltriethoxysilane, methyltripropoxysilane, ethyltrimethoxysilane or ethyltriethoxysilane. Particularly preferred is methyltrimethoxysilane or ethyltrimethoxysilane. As concrete examples of a T monomer having a substituted organic group or the like, the following compounds can be cited, for example.

Vinyltrimethoxysilane, vinyltriethoxysilane, phenyltrimethoxysilane, phenyltriethoxysilane, 3-chloropropyltrimethoxysilane, 3,3,3-trifluoropropyltrimethoxysilane, 3-mercaptopropyltrimethoxysilane, 3-glycidoxypropyltrimethoxysilane, 3-glycidoxypropyltriethoxysilane, 2-(3,4-epoxycyclohexyl)ethyltrimethoxysilane, 2-(3,4-epoxycyclohexyl)ethyltriethoxysilane, 3-acryloyloxypropyltrimethoxysilane, 3-methacryloyloxypropyltrimethoxysilane, 3-aminopropyltrimethoxysflane, 3-aminopropyltriethoxysilane, N-(2-aminoethyl)-3-aminopropyltrimethoxysilane and 3-cyanoethyltrimethoxysilane.

As a T monomer represented by $(R'-)_aSi(-Z)_{4-a}$ (a=3) other than the T monomer represented by $R-Si(-OY)_3$, there can be cited, for example, methyltrichlorosilane, ethyltrichlorosilane, phenyltrichlorosilane, 3-glycidoxypropyltrichlorosilane, methyltriacetoxysilane, ethyltriacetoxysilane or the like.

In a D monomer represented by $(R'-)_aSi(-Z)_{4-a}$ (a=2), the two R' may be the same or different. In a case where they are the same, they are preferably an alkyl group having from 1 to 4 carbon atoms. In a case where they are different, it is preferable that one R' is an alkyl group having from 1 to 4 carbon atoms, and the other R' is a substituted organic group which is substituted by the above-mentioned functional group, functional group-containing organic group or the like. Further, the Z group is preferably an alkoxy group having from 1 to 4 carbon atoms, an acetoxy group or the like. As the D monomer, the following compounds can be cited, for example.

Dimethyldimethoxysilane, dimethyldiethoxysilane, vinylmethyldimethoxysilane, vinylmethyldiethoxysilane, phenylmethyldimethoxysilane, phenylmethyldiacetoxysilane, 3-chloropropylmethyldimethoxysilane, 3,3,3-trifluoropropylmethyldimethoxysilane, 3-mercaptopropylmethyldiethoxysilane, 3-acryloyloxypropylmethyldimethoxysilane, 3-methacryloyloxypropylmethyldimethoxysilane, 3-aminopropylmethyldimethoxysilane, 3-aminopropylmethyldiethoxysilane, N-(2-aminoethyl)-3-aminopropylmethyldimethoxysilane, and 3-cyanoethylmethyldimethoxysilane.

In a Q monomer represented by $(R'-)_aSi(-Z)_{4-a}$ (a=0), the four Z groups may be different, but they are usually the same. The Z group is preferably an alkoxy group having from 1 to 4 carbon atoms, and is particularly preferably a methoxy group or an ethoxy group. As the Q monomer, the following compounds can be cited, for example.

Tetramethoxysilane, tetraethoxysilane, tetra n-propoxysilane, tetra n-butyloxysilane, tetra sec-butyloxysilane and tetra t-butyloxysilane.

The organo polysiloxane (T) used in the present invention can be obtained by subjecting the above T monomer or the like to partial hydrolytic condensation. Usually, this reaction is carried out by heating the T monomer or the like and water in a solvent. It is preferred that a catalyst is present in the reaction system. The desired organo polysiloxane can be produced by adjusting the reaction conditions such as the type of the monomer, the amount of water, the heating temperature, the type and amount of the catalyst, the reaction time, etc. Further, in some cases, it is also possible that a commercially available organo polysiloxane is used as it is as the desired organo polysiloxane, or the desired organo polysiloxane is produced by using a commercially available organo polysiloxane.

The above catalyst is preferably an acid catalyst. As the acid catalyst, there can be cited an inorganic acid such as hydrochloric acid, sulfuric acid, nitric acid, phosphoric acid, nitrous acid, perchloric acid or sulfamic acid; or an organic acid such as formic acid, acetic acid, propionic acid, butyric acid, oxalic acid, succinic acid, maleic acid, lactic acid or p-toluenesulfonic acid. Particularly preferred is acetic acid. The above solvent is preferably a hydrophilic organic solvent, and is particularly preferably an alcohol type solvent. As the alcohol type solvent, there can be cited methanol, ethanol, 1-propanol, 2-propanol, 1-butanol, 2-butanol, 2-methyl-1-propanol, 2-ethoxyethanol, 4-methyl-2-pentanol, 2-butoxyethanol or the like. With respect to the reaction temperature, in a case where a catalyst is present, the reaction can be made at room temperature. Usually, within a reaction temperature of from 20 to 80°C, a suitable temperature is adopted in accordance with the purpose.

The hydrolytic condensation reaction is a reaction in which T1 is formed from a T monomer (T unit having three -OX only without having an oxygen atom (O*) linking two silicon atoms, which is sometimes referred to as "T0", hereinafter), T2 is formed from T1, and T3 is formed from T2. The reaction rate can be considered to be low in the order of the condensation reaction in which T1 is formed from T0 having at least one hydrolyzable group converted to a hydroxy group, a condensation reaction in which T2 is formed from T1 in which at least one of the two -OX is a hydroxy group, and a condensation reaction in which T3 is formed from T2 in which -OX is a hydroxy group. Also in consideration of a hydrolytic reaction of a hydrolyzable group, it can be considered that the peak of the amount of each unit to be present moves from T0 to T3 as the reaction proceeds. In a case where the reaction conditions are relatively mild, it can be considered that the movement of the peak of the amount present proceeds relatively steadily. On the other hand, in a case where the reaction conditions are relatively vigorous, the reaction proceeds randomly, resulting in that the distribution of the amount of each unit present tends to be flat, and the amount of T0 or T1 present tends to be large as compared with the amount of T2 or T3 present.

The reactivity for the above condensation reaction changes depending on R, and if R differs, the reactivity of a hydroxy group also changes. Usually, as R becomes small (for example, in a case where R is an alkyl group, as the number of carbon atoms in the alkyl group becomes small), the reactivity of a hydroxy group becomes high. Accordingly, it is preferred to select the T monomer by taking the relation between the reactivity of the hydrolyzable group and the reactivity of the hydroxy group into consideration.

Further, the rate of the hydrolysis reaction of a hydrolyzable group to a hydroxy group changes depending on the type of the hydrolyzable group, and it is preferred to take the relation with the rate of the condensation reaction into consideration. For example, in a case where an OX group in T2 is an alkoxy group, if its hydrolysis reaction rate is too slow, T2 in which the OX group is a hydroxy group becomes less. Likewise, if the hydrolysis reaction rate is too slow, T1 in which the OX group is a hydroxy group becomes less. Therefore, it becomes difficult to obtain an organo polysiloxane

in which the ratio in amount of the hydroxy group present to the alkoxy group in the organo polysiloxane is high. Accordingly, the alkoxy group being an OX group is preferably an alkoxy group having a high reactivity, namely, an alkoxy group having a small number of carbon atoms, and a methoxy group is most preferred In a case where the reactivity of a hydrolyzable group is sufficiently high, it is possible to obtain an organo polysiloxane having a high proportion of hydroxy groups from an organo polysiloxane having a high proportion of hydrolyzable groups without proceeding with the condensation reaction so much.

The silicone type hard coating agent composition used in the present invention contains the above-described curable organo polysiloxane, preferably the organo polysiloxane (T). The content of the organo polysiloxane in the silicone type hard coating agent composition is preferably from 50 to 100 mass%, and is more preferably from 60 to 95 mass% to the total amount of the composition excluding the solvent (referred to as "nonvolatile component" according to need, hereinafter).

(3-2) Optional Component

The silicone type hard coating agent composition used in the present invention may contain various additives, in addition to the above-mentioned organo polysiloxane. For example, in order to further improve the abrasion resistance of the silicone type hard coating layer of the resin substrate having a hard coating layer of the present invention, a silicone type hard coating agent composition containing fine silica particles is preferred. For such a purpose, it is preferred to incorporate colloidal silica to the silicone type hard coating agent composition. Note that colloidal silica is meant for one having fine silica particles dispersed in water or an organic solvent such as methanol, ethanol, isobutanol or propylene glycol monomethyl ether.

Further, the fine silica particles may be incorporated to the raw material monomer in a process of producing the above-mentioned organo polysiloxane. By producing the organo polysiloxane in a reaction system containing colloidal silica, it is possible to obtain the organo polysiloxane containing fine silica particles. For example, by adding a T monomer and, if required, water or an acid catalyst, to colloidal silica, it is possible to produce the organo polysiloxane as described above in the dispersion medium of colloidal silica. By using the organo polysiloxane thus obtained, it is possible to produce a silicone type hard coating agent composition used in the present invention containing fine silica particles.

The above-mentioned fine silica particles used for the silicone type hard coating agent composition according to the present invention preferably has an average particle size (BET method) of from 1 to 100 nm. If the average particle size exceeds 100 nm, the particles will diffusely reflect light, so that a haze value of the obtainable silicone type hard coating layer becomes large, which is sometimes unfavorable from a point of view of the optical quality. Further, the average particle size is particularly preferably from 5 to 40 nm. This is for maintaining the transparency of the silicone type hard coating layer while imparting the abrasion resistance to the silicone type hard coating layer. Further, the colloidal silica may be used in either in a water-dispersed type or an organic solvent-dispersed type, but, it is preferred to use a water-dispersed type. Further, it is particularly preferred to use colloidal silica dispersed in an acidic aqueous solution. Further, to colloidal silica, fine inorganic particles other than fine silica particles, such as alumina sol, titanium sol or ceria sol, may be incorporated.

The content of the fine silica particles in the silicone type hard coating agent composition used in the present invention is preferably from 1 to 50 mass%, and is more preferably from 5 to 40 mass%, to the total amount of the composition excluding the solvent (the nonvolatile component). If the content of the fine silica particles in the nonvolatile component in the silicone type hard coating agent composition used in the present invention is less than 1 mass%, adequate abrasion resistance may not be secured in the obtainable silicone type hard coating layer, and if the content exceeds 50 mass%, the proportion of the organo polysiloxane in the nonvolatile component becomes too low, and there is a chance that it becomes difficult to form a silicone type hard coating layer by heat curing of the organo polysiloxane, cracking occurs in the obtainable silicone type hard coating layer, or aggregation of fine silica particles takes place to deteriorate the transparency of the silicone type hard coating layer.

The silicone type hard coating agent composition used in the present invention may further contain an additive such as a defoaming agent or a viscosity-adjusting agent for the purpose of improving the coating properties, may contain an additive such as an adhesion-imparting agent for the purpose of improving the adhesion to the above-mentioned acrylic primer layer, or may contain a leveling agent as an additive for the purpose of improving the coating properties and the smoothness of the obtainable coating film. The amounts of such additives to be incorporated are preferably from 0.01 to 2 parts by mass of each additive component, based on 100 parts by mass of the organo polysiloxane. Further, the silicone type hard coating agent composition used in the present invention may contain a dye, a pigment, a filler, etc. within a rage not to impair the purpose of the present invention.

The silicone type hard coating agent composition used in the present invention may further contain a curing catalyst. As the curing catalyst, there can be cited an alkali metal salt such as a lithium salt, a sodium salt or a potassium salt, of an aliphatic carboxylic acid (such as formic acid, acetic acid, propionic acid, butyric acid, lactic acid, tartaric acid or succinic acid); a quaternary ammonium salt such as a benzyltrimethylammonium salt, a tetramethylammonium salt

or tetraethylammonium salt; a metal alkoxide or chelate of aluminum, titanium, cerium or the like; ammonium perchlorate, ammonium chloride, ammonium sulfate, sodium acetate, an imidazole derivative and salt thereof, ammonium trifluoromethylsulfonate, or bis(trifluoromethylsulfonyl) bromomethyl ammonium. Further, the amount of curing catalyst to be incorporated is preferably from 0.01 to 10 parts by mass, and is more preferably from 0.1 to 5 parts by mass, based on 100 parts by mass of the organo polysiloxane. If the content of the curing catalyst is less than 0.01 part by mass, a sufficient curing rate is difficult to be obtained, and if it exceeds 10 parts by mass, the storage stability of the silicone type hard coating agent composition may deteriorate, or precipitates may be formed.

Further, the silicone type hard coating agent composition used in the present invention preferably further contains an ultraviolet absorber to suppress yellowing of the resin substrate. As the ultraviolet absorber, there can be cited a benzophenone type ultraviolet absorber, a benzotriazole type ultraviolet absorber, a benzimidazole type ultraviolet absorber, a cyanoacrylate type ultraviolet absorber, a salicylate type ultraviolet absorber, a benzylidenemalonate type ultraviolet absorber or a triazine type ultraviolet absorber. One type of such ultraviolet absorbers may be used alone, or two or more types may be used in combination. Further, in order to suppress bleeding out of the above ultraviolet absorber from the silicone type hard coating layer, an ultraviolet absorber having a trialkoxysilyl group may also be used. The ultraviolet absorber having a trialkoxysilyl group is converted to a hydroxy group by a hydrolytic reaction at the time of forming a silicone type hard coating layer by heat curing of the organo polysiloxane, and then incorporated in the silicone type hard coating layer by a dehydration condensation reaction, resulting in that it is possible to suppress bleeding out of the ultraviolet absorber from the silicone type hard coating layer. Concretely, as such trialkoxysilyl group, there can be cited a trimethoxysilyl group, a triethoxysilyl group or the like. The content of the ultraviolet absorber in the silicone type hard coating agent composition is preferably from 0.1 to 50 parts by mass, and is particularly preferably from 0.1 to 30 parts by mass, based on 100 parts by mass of the organo polysiloxane.

Further, in the present invention, in order to prevent gelation of the silicone type hard coating agent composition at room temperature and to increase the storage stability, it is preferred to adjust the pH of the silicone type hard coating agent composition to from 3.0 to 6.0, more preferably from 4.0 to 5.5. In a condition where the pH is 2.0 or less or 7.0 or more, hydroxy groups bonded to silicon atoms are extremely unstable, such being not suitable for storage. As a method of adjusting the pH, addition of an acid, adjustment of the content of the curing catalyst, or the like may be mentioned. Such an acid may be an inorganic acid such as hydrochloric acid, sulfuric acid, nitric acid, phosphoric acid, nitrous acid, perchloric acid or sulfamic acid; or an organic acid such as formic acid, acetic acid, propionic acid, butyric acid, oxalic acid, succinic acid, maleic acid, lactic acid or p-toluenesulfonic acid.

The silicone type hard coating agent composition used in the present invention is usually prepared in a form in which the organo polysiloxane as the essential component, and various additives and the like as optional components, are dissolved or dispersed in a solvent. It is necessary that all nonvolatile components in the above-mentioned silicone type hard coating agent composition are stably dissolved or dispersed, and for such a purpose, the solvent contains alcohol in an amount of from 33 to 97 mass%, more preferably from 60 to 95 mass%, to the total amount of the silicone type hard coating agent composition. Further, in the silicone type hard coating agent composition used in the present invention, the solvent may contain water in a range where the organo polysiloxane is stably dissolved or dispersed in the solvent.

As an alcohol used for such a solvent, methanol, ethanol, 1-propanol, 2-propanol, 1-butanol, 2-butanol, 2-methyl-1-propanol, 1-methoxy-2-propanol, 2-ethoxyethanol, 4-methyl-2-pentanol, 2-butoxyethanol and the like are preferred, and among them, an alcohol having a boiling point of from 80 to 160°C is preferred from a point of view that the solubility of the organo polysiloxane is good, and the coating properties are good. Concretely, ethanol, 1-propanol, 2-propanol, 1-butanol, 2-butanol, 2-methyl-1-propanol, 1-methoxy-2-propanol, 2-ethoxyethanol, 4-methyl-2-pentanol or 2-butoxyethanol is preferred.

Further, the solvent used for the silicone type hard coating agent composition according to the present invention includes a lower alcohol or the like generated along the hydrolysis of the raw material monomer such as an alkyltrialkoxysilane at the time of producing the organo polysiloxane, water in the water-dispersed type colloidal silica, which is not involved in the hydrolytic reaction, and, in a case where an organic solvent-dispersed type colloidal silica is used, such a dispersing organic solvent.

Further, in the silicone type hard coating agent composition used in the present invention, a solvent other than the alcohol which can be mixed with water/alcohol, may be used in combination as a solvent other than the above-described solvent. As such a solvent, a ketone such as acetone or acetyl acetone; an ester such as ethyl acetate or isobutyl acetate; or an ether such as propylene glycol monomethyl ether, dipropylene glycol monomethyl ether or diisopropyl ether can be cited.

The amount of the solvent used in the silicone type hard coating agent composition according to the present invention is preferably from 50 to 3000 parts by mass, and is more preferably from 150 to 2000 parts by mass, based on 100 parts by mass of the total nonvolatile component in the silicone type hard coating agent composition.

The silicone type hard coating agent composition used in the present invention can be obtained by uniformly mixing the above-described various components through a conventional method.

(3-3) Formation of Silicone Type Hard Coating Layer

The resin substrate having a hard coating layer of the present invention can be produced by applying the silicone type hard coating agent composition of the present invention onto the acrylic primer layer obtained as above to form a coating film and curing the curable compounds in the coating film to form the silicone type hard coating layer.

The method of applying the silicone type hard coating agent composition is not particularly limited, and may be a usual coating method such as a spray coating method, a dip coating method or a flow coating method. It is preferred to suitably adjust the viscosity, the solid content concentration, etc. of the silicone type hard coating agent composition depending on the coating method.

The silicone type hard coating agent composition applied onto the acrylic primer layer is usually heat-cured after drying and removing the solvent under a temperature condition from room temperature to less than a heat deformation temperature of the resin substrate and the acrylic primer layer. As a drying condition of the solvent, there can be cited a condition where a temperature is from 0 to 60°C, and a period of time is from 10 minutes to 10 hours, for example. Further, it is also possible to employ a vacuum drying while adjusting a degree of pressure reduction, or the like. Such a heat curing reaction is preferably carried out at a high temperature within a range where there is no problem with respect to the heat resistance of the resin substrate and the acrylic primer layer, so that the curing can be completed quickly. However, for example, in a case where the organo polysiloxane having a methyl group as a monovalent organic group is used, if the temperature during the heat curing is 250°C or higher, the methyl group is detached by heat decomposition, which is unfavorable. Therefore, the curing temperature is preferably from 50 to 200°C, particularly preferably from 80 to 160°C, and most preferably from 100°C to 140°C. The curing time is preferably from 10 minutes to 4 hours, particularly preferably from 20 minutes to 3 hours, and most preferably from 30 minutes to 2 hours.

The thickness (thickness before curing) of the coating film formed by applying the silicone type hard coating agent composition on the surface of the acrylic primer layer, depends on the solid content concentration in the composition. It is preferably suitably adjusted, for example, by taking the solid content concentration into consideration, so that the film thickness of the silicone type hard coating layer formed after curing the silicone type hard coating agent composition falls within a predetermined range, preferably within the following range.

The film thickness of the silicone type hard coating layer formed on the acrylic primer layer is preferably not less than 0.5 μm nor more than 10 μm, more preferably not less than 1 μm nor more than 10 μm, and particularly preferably not less than 2 μm nor more than 10 μm, in a state after curing, namely, in a state of the resin substrate having a hard coating layer of the present invention.

If the film thickness of the silicone type hard coating layer is too small, it is difficult to secure sufficient abrasion resistance. On the other hand, if the film thickness of the silicone type hard coating layer is too large, cracking or delamination may be likely to occur. Accordingly, in order to suppress the occurrence of cracking or delamination while securing sufficient abrasion resistance, the film thickness of the silicone type hard coating layer is preferably not less than 0.5 μm and not more than 10 μm.

In the resin substrate having a hard coating layer of the present invention, in order to further improve the abrasion resistance and film strength, a top coating layer containing $SiO_2$ as a main component may be applied onto the silicone type hard coating layer of the resin substrate having a hard coating layer. As a method of forming the top coating layer containing $SiO_2$ as the main component, a method of applying poly(perhydro)silazane onto the above silicone type hard coating layer, followed by curing, or a method of vapor deposition, sputtering or the like, may be preferably used.

EXAMPLES

Hereinafter, the present invention will be described in further detail with reference to Examples, and it should be understood that the present invention is by no means restricted by these Examples. Note that Examples 1 to 5 are working examples according to the present invention, and an Example 6 and an Example 7 are comparative examples. Further, analyses of organo polysiloxane were conducted by the following method.

(1) Analyses of Bonding States of Silicon Atoms in Organo Polysiloxanes

The bonding states of silicon atoms in organo polysiloxanes in the hard coating agent composition, concretely, the abundance ratios of M units, D units, T units and Q units, and the abundance ratios of T0 to T3, were respectively obtained from the peak area ratios of $^{29}$Si-NMR by using a nuclear magnetic resonance analyzer ($^{29}$Si-NMR: ECP400 manufactured by JEOL Ltd.). The measuring conditions are such that a 10 mmΦ test tube made of polytetrafluoroethylene (PTFE) is used, the probe is T10, the resonant frequency is 79.42 MHz, the pulse width is 10 μsec, the waiting time is 20 sec, the cumulated number is 1500 times, the relaxation agent contains 0.1 mass % of Cr $(acac)_3$, and the external standard sample is tetramethylsilane. Further, the chemical shifts of $^{29}$Si-NMR attributable to the respective structures

are as follows.

(M Units to Q Units)

M units: 15 to 5 ppm,
D units: -15 to -25 ppm,
T units: -35 to -75 ppm,
Q units: -90 to -130 ppm.

(T0 to T3)

T0: 40 to -41 ppm,
T1: -49 to -50 ppm,
T2: -57 to -59 ppm,
T3: -66 to -70 ppm.

(2) Number Average Molecular Weight Mn, Weight Average Molecular Weight Mw, and Dispersivity Mw/Mn

They were obtained by using gel permeation chromatography (GPC, Waters 2695 manufactured by Waters Corporation, RI detection, column: Styragel guard colum + HR1 + HR4 + HR5E, eluent: chloroform).

[1] Synthesis of Organo Polysiloxane and Preparation of Organo Polysiloxane Composition Solution Into a 1 L flask, 200 g of water-dispersed colloidal silica having an average particle size of about 15 nm (pH 3.1, fine silica particle solid content of 35 mass%) and 0.2 g of acetic acid were charged, and 138 g of methyltrimethoxysilane was added. After stirring for one hour, this composition was aged at 25°C for 4 days to ensure the partial hydrolytic condensation in the silica/methanol water dispersion liquid.

In this composition, the nonvolatile component was 40 mass%, and the obtained organo polysiloxane (hereinafter, referred to as "PSi-1") had bond structures composed mainly of T units (number of T units: total number of respective M units, D units and Q units =100:0), and the abundance ratios of the respective T units obtained from the chemical shifts of $^{29}$S1-NMR were TO:T1:T2:T3 = ND:2:54:44. In the obtained organo polysiloxane, monomer-form T0 [R-Si(OH)$_3$] (wherein R is a monovalent organic group) was not substantially present, and it was confirmed that the raw material methyltrimethoxysilane was substantially completely converted to oligomer-form organo polysiloxane. Mn of the obtained organo polysiloxane (PSi-1) was 400, Mw was 670, and Mw/Mn was 1.68.

To 100 parts by mass of the PSi-1 solution obtained as described above (containing fine silica particles), 4 parts by mass of a benzophenone type ultraviolet absorber was added, followed by aging at 25°C for 24 hours or more. By using 1-butanol and isopropanol as diluting solvents, a silicone type hard coating agent composition (HC-1) having 25 mass% of nonvolatile component (150°C, 45 minutes) and a viscosity of 4.4 mPa·s was prepared. The pH of the composition was stabilized at 5.0.

By using the silicone type hard coating agent composition (HC-1) obtained as described above and materials presented in the following Table 2 and Table 3 as the components constituting the acrylic primer layer, resin substrate samples each having a hard coating layer were produced in the following Examples 1 to 7.

<Components Used for Producing Acrylic Primer Layer>

(1) Acrylic Polymer (A)

As the acrylic polymer (A), AP-1 presented in Table 2 was used. For comparison, an acrylic polymer AP-2 having a weight average molecular weight being out of the range of the present invention was used.

[Table 2]

| Abbreviation of acrylic polymer | Type of acrylic polymer | Weight average molecular weight (Mw) | Tg(°C) | Acid value [mgKOH/g] | Trade name (Manufacturer) |
|---|---|---|---|---|---|
| AP-1 | PMMA | About 430,000 | 105 | 1 or less | BR88 (MITSUBISHI RAYON CO., LTD.) |
| AP-2 | PMMA | About 95,000 | 105 | 1 | BR80 (MITSUBISHI RAYON CO., LTD.) |

(2) Triazine Type Ultraviolet Absorber (B)

As the triazine type ultraviolet absorber (B), UVA-1 presented in Table 3 was used. For comparison, a triazine type ultraviolet absorber UVA-2 represented by the following formula (B-3) and having an absorption coefficient ε (350-380) ave being out of the range of the present invention, was used.

[Table 3]

| Abbreviation | Name of compound | Structural formula | Absorption coefficient ε (350-380) ave | Trade name (Manufacturer) |
|---|---|---|---|---|
| UVA-1 | 2-[4-(4,6-Bis-{2-hydroxy-4-[1-(6-methyl-heptyloxycarbonyl)-ethoxy]-phenyl}-[1,3,5]triazin-2-yl)-3-hydroxy-phenoxy]-propionic acid 6-methyl-heptyl ester | (B-1) | 31.0 | CGL777 (Ciba Japan) |
| UVA-2 | Reaction product of 2-(4,6-bis(2,4-dimethylphenyl)-1,3,5-triazin-2-yl)-5-hydroxyphenyl and oxirane | (B-3) | 4.5 | TINUVIN 400 (Ciba Japan) |

[Chemical Formula 15]

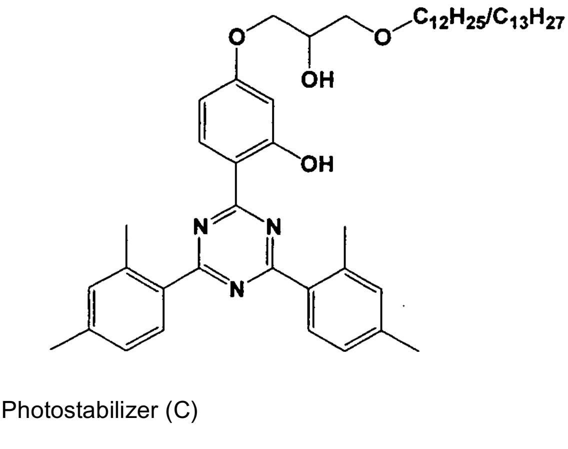

···(B-3)

(3) Hindered Amine Photostabilizer (C)

As the hindered amine photostabilizer (C), the following three types were used. Note that HALS-1, HALS-2, and HALS-3 are abbreviations of the hindered amine photostabilizers (C). HALS-1 is TINUVIN 123 (trade name, manufactured by Ciba Japan), being a compound represented by the above structural formula (H-1). HALS-2 is TINUVIN 292 (trade name, manufactured by Ciba Japan), being a mixture of a compound represented by the above structural formula (H-21) and a compound represented by (H-22) (mixing mass ratio, (H-21):(H-22) = about 75:25). HALS-3 is LA62 (trade name, manufactured by ADEKA Corporation), being a compound represented by the above structural formula (H-3).

Further, a method of evaluations conducted with respect to the obtained resin substrate samples each having

a hard coating layer will be described hereinafter.

[Film Thickness]

The film thicknesses of the acrylic primer layer and the silicone type hard coating layer in each resin substrate sample having a hard coating layer obtained in the following Examples 1 to 7 were measured by using an interference film thickness measuring apparatus (Solid Lambda Thickness, manufactured by Spectra Co-op). At this time, as the refractive index, a value of n = 1.56 was used with respect to the acrylic primer layer, and a value of n = 1.46 was used with respect to the silicone type hard coating layer.

[Initial Appearance]

Cracking, delamination, white turbidity or the like of an entire coating layer including the acrylic primer layer and the silicone type hard coating layer, namely, the entire hard coating (hereinafter, referred to as "entire hard coating") was visually evaluated, and the entire hard coating without any problem was regarded as passed (O). The entire hard coating on which cracking, delamination, white turbidity or the like was confirmed was regarded as failed (X), and the content of the problem was described in the column of results.

[Initial Abrasion Resistance]

In accordance with JIS K5600 (5.9), on a Taber abrasion tester (model: ROTARY ABRASION TESTER, manufactured by Toyo Seiki Seisaku-Sho, Ltd.), an abrasive wheel CALIBRASE (registered trademark) CS-10F (manufactured by TABER Industries) was mounted, and with respect to the resin substrate samples each having a hard coating layer obtained in the following Examples 1 to 7, a haze after rotation of 500 times under a load of 500 g was measured, and a haze difference $\Delta H_{500}$ between before and after the test was taken as the abrasion resistance. The haze was measured in accordance with JIS K7105 (6.4) by using a hazemeter (model: HGM-2 manufactured by Suga Test Instruments Co., Ltd.). As a judgment standard, $\Delta H_{500} \leq +10$ was regarded as "pass".

[Method of Weather Resistance Test]

Using an accelerated weather resistance tester (DAIPLA METAL WEATHER KU-R4 manufactured by DAIPLA WINTES CO., LTD.) employing a metal halide lamp as a light source, three conditions of light irradiation, total darkness and dew condensation were continuously applied to the resin substrate samples each having a hard coating layer obtained in the following Examples 1 to 7. Note that the conditions for the above irradiation are such that light is irradiated for 4 hours under such conditions that the illuminance is 90 mW/cm$^2$, the black panel temperature is 63 °C, and the relative humidity is 70%, the conditions for the dew condensation are such that the sample is maintained for 4 hours under a condition where the black panel temperature is naturally left to cool from 70°C to 30°C under a condition of a relative humidity of 98% without irradiation with light, and the conditions for the above total darkness are such that the sample is maintained for 4 hours without irradiation with light under such conditions that the black panel temperature is 70°C and the relative humidity is 90%.

After a lapse of 1096 hours after the application of the above loads, the appearance was visually observed. Further, in accordance with JIS K7105 (6.4), a haze before and after the weather resistance test was measured using the hazemeter (model: HGM-2 manufactured by Suga Test Instruments Co., Ltd.), and a phase difference ($\Delta H$= (haze after test) - (haze before test)) was determined. In accordance with a method of JIS K7105, a YI value after the weather resistance test ($YI_{1096}$) was determined, and a difference between the $YI_{1096}$ and a YI value before the weather resistance test ($YI_0$) ($\Delta YI = YI)_{1096} - YI_0$) was calculated.

Appearance: Cracking, delamination, white turbidity or the like of the entire hard coating was visually evaluated, and the entire hard coating without any problem was regarded as passed (O). The entire hard coating on which cracking, delamination, white turbidity or the like was confirmed was regarded as failed (X), and the content of the problem was described in the column of results.

$\Delta H$: When $\Delta H$ is 5 or less, it is regarded as passed, and when it is larger than 5, it is regarded as failed (note that in the evaluation based on $\Delta H$, if $\Delta H$ is 5 or less, there is provided practically sufficient performance).

$\Delta YI$: When $\Delta YI$ is 5 or less, it is regarded as passed, and when it is larger than 5, it is regarded as failed (note that in the evaluation based on $\Delta YI$, if $\Delta YI$ is 5 or less, there is provided practically sufficient performance).

[Overall Judgment]

As an overall judgment, the sample which passed all of the initial appearance evaluated based on the above

standards, the initial abrasion resistance ($\Delta H_{500}$), the appearance after the weather resistance test, ΔH, and ΔYI, was regarded as passed (O). Further, the sample which failed any one of the above was regarded as failed (X) as the overall judgment.

Here, the weather resistance test used in the present invention aims at a level exceeding 1000 hours in the above metal weather meter (actually, evaluation is conducted after 1096 hours). Regarding acceleration factors of the sunshine weather meter used in the above-described Patent References 1 and 2, and the metal weather meter used in the present invention, although there is an aspect that the acceleration factors depend on conditions of materials and weather meters, it is said that the acceleration factor of the metal weather meter is 10 times or more higher than that of the sunshine weather meter, as disclosed in technical literature (Polyfile, 2004. 4, pages 66 to 70). Therefore, it can be said that the weather resistance based on 1000 hours in the metal weather meter corresponds to the weather resistance far higher than that based on 5000 hours in the sunshine weather meter used in Patent References 1 and 2.

[Example 1]

A polymer solution 1 (a solution in which an acrylic polymer (AP-1), 1-methoxy-2-propanol, and diacetone alcohol are mixed in a ratio of 5 mass% : 81 mass% : 14 mass%) (60 g), UVA-1 (0.45 g), and HALS-1 (0.015 g) were mixed until they became uniform to prepare a coating liquid Pr-1. The coating liquid Pr-1 obtained as above was applied on a polycarbonate sheet (CARBOGLASS (registered trademark) Polish Clear (trade name, manufactured by Asahi Glass Company, Limited,) thickness: 3 mm) by a dipping method so that a film thickness became from 4 to 6 μm, preliminary dried at 25°C for 10 minutes, and then dried for 30 minutes in an oven set at 120°C, thereby forming an acrylic primer layer.

Next, the silicone type hard coating agent composition HC-1 was coated onto the acrylic primer layer of the polycarbonate sheet having the acrylic primer layer formed on the surface thereof, by a dipping method, so that a film thickness became from 3 to 4 μm, dried at 25°C for 20 minutes, and then cured at 120°C for one hour to produce a sample 1 of a resin substrate having a hard coating layer in which the acrylic primer layer and the silicone type hard coating layer were sequentially laminated on both sides of the polycarbonate sheet.

The sample 1 was subjected to the above-described respective evaluations, in which there was no problem in the initial appearance, and the abrasion resistance ($\Delta H_{500}$ was 10 or less), and regarding the weather resistance test, there was no problem in the appearance and each of ΔYI and ΔH was 5 or less, and accordingly, the sample 1 was judged as passed.

[Example 2]

The polymer solution 1 (60 g), UVA-1 (0.45 g), and HALS-1 (0.03 g) were mixed until they became uniform to prepare a coating liquid Pr-2. By using the obtained coating liquid Pr-2 and the silicone type hard coating agent composition HC-1, a sample 2 of a resin substrate having a hard coating layer in which the acrylic primer layer and the silicone type hard coating layer were sequentially laminated on both sides of a polycarbonate sheet, was produced in a same manner to the Example 1. The sample 2 was subjected to the above-described respective evaluations, in which there was no problem in the initial appearance, and the abrasion resistance ($\Delta H_{500}$ was 10 or less), and regarding the weather resistance test, there was no problem in the appearance and each of ΔYI and ΔH was 5 or less, and accordingly, the sample 2 was judged as passed.

[Example 3]

The polymer solution 1 (60 g), UVA-1 (0.45 g), and HALS-2 (0.015 g) were mixed until they became uniform to prepare a coating liquid Pr-3. By using the obtained coating liquid Pr-3 and the silicone type hard coating agent composition HC-1, a sample 3 of a resin substrate having a hard coating layer in which the acrylic primer layer and the silicone type hard coating layer were sequentially laminated on both sides of a polycarbonate sheet, was obtained in a same manner to the Example 1. The sample 3 was subjected to the above-described respective evaluations, in which there was no problem in the initial appearance, and the abrasion resistance ($\Delta H_{500}$ was 10 or less), and regarding the weather resistance test, there was no problem in the appearance and each of ΔYI and ΔH was 5 or less, and accordingly, the sample 3 was judged as passed.

[Example 4]

The polymer solution 1 (60 g), UVA-1 (0.45 g), and HALS-2 (0.03 g) were mixed until they became uniform to prepare a coating liquid Pr-4. By using the obtained coating liquid Pr-4 and the silicone type hard coating agent composition HC-1, a sample 4 of a resin substrate having a hard coating layer in which the acrylic primer layer and the silicone type

hard coating layer were sequentially laminated on both sides of a polycarbonate sheet, was obtained in a same manner to the Example 1. The sample 4 was subjected to the above-described respective evaluations, in which there was no problem in the initial appearance, and the abrasion resistance ($\Delta H_{500}$ was 10 or less), and regarding the weather resistance test, there was no problem in the appearance and each of ΔYI and ΔH was 5 or less, and accordingly, the sample 4 was judged as passed.

[Example 5]

The polymer solution 1 (60 g), UVA-1 (0.45 g), and HALS-3 (0.015 g) were mixed until they became uniform to prepare a coating liquid Pr-5. By using the obtained coating liquid Pr-5 and the silicone type hard coating agent composition HC-1, a sample 5 of a resin substrate having a hard coating layer in which the acrylic primer layer and the silicone type hard coating layer were sequentially laminated on both sides of a polycarbonate sheet, was obtained in a same manner to the Example 1. The sample 5 was subjected to the above-described respective evaluations, in which there was no problem in the initial appearance, and the abrasion resistance ($\Delta H_{500}$ was 10 or less), and regarding the weather resistance test, there was no problem in the appearance and each of ΔYI and ΔH was 5 or less, and accordingly, the sample 5 was judged as passed.

[Example 6]

The polymer solution 1 (60 g), and UVA-1 (0.45 g) were mixed until they became uniform to prepare a coating liquid Pr-6. By using the obtained coating liquid Pr-6 and the silicone type hard coating agent composition HC-1, a sample 6 of a resin substrate having a hard coating layer in which the acrylic primer layer and the silicone type hard coating layer were sequentially laminated on both sides of a polycarbonate sheet, was obtained in a same manner to the Example 1. The sample 6 was subjected to the above-described respective evaluations, in which there was no problem in the initial appearance, and the abrasion resistance ($\Delta H_{500}$ was 10 or less), and regarding the weather resistance test, each of ΔYI and ΔH was 5 or less, but, there was a problem in the appearance (cracking), and accordingly, the sample 6 was judged as failed.

[Example 7]

A polymer solution 2 (a solution in which an acrylic polymer (AP-2), 1-methoxy-2-propanol, and diacetone alcohol were mixed in a ratio of 15 mass% : 72 mass% : 13 mass%) (60 g), UVA-1 (0.45 g), UVA-2 (0.9 g), and HALS-2 (0.45 g) were mixed until they became uniform to prepare a coating liquid Pr-7. By using the obtained coating liquid Pr-7 and the silicone type hard coating agent composition HC-1, a sample 7 of a resin substrate having a hard coating layer in which the acrylic primer layer and the silicone type hard coating layer were sequentially laminated on both sides of a polycarbonate sheet, was obtained in a same manner to the Example 1. The sample 7 was subjected to the above-described respective evaluations, in which there was no problem in the initial appearance, and the abrasion resistance ($\Delta H_{500}$ was 10 or less), and regarding the weather resistance test, each of ΔYI and ΔH was 5 or less, but, there was a problem in the appearance (cracking), and accordingly, the sample 7 was judged as failed.

With respect to the above Examples 1 to 7, components constituting the acrylic primer layers and the silicone type hard coating layers of the obtained resin substrate samples each having a hard coating layer, film thicknesses, amounts of the compounded acrylic polymers, triazine type ultraviolet absorbers, hindered amine photostabilizers and the like (mass%: contents to the entire nonvolatile component in the coating liquid), and evaluation results of the abrasion resistance test, the weather resistance test and the like of the resin substrate samples each having a hard coating layer were summarized in Table 4.

[Table 4]

| EXAMPLE | Acrylic primer layer | | | | | | | | Silicone type hard coating layer | | Evaluation | | | | | |
|---|---|---|---|---|---|---|---|---|---|---|---|---|---|---|---|---|
| | Acrylic polymer | | | Triazine type ultraviolet absorber | | Hindered amine photostabilizer | | Film thickness [μm] | Abbreviation of composition | Film thickness [μm] | Initial evaluation | | 1096 hours after weather resistance test | | | Over all judgment |
| | Abbreviation | Mw | Compounding amount (wt%) | Abbreviation | Compounding amount (wt%) | Abbreviation | Compounding amount (wt%) | | | | Appearance | Abrasion resistance | Appearance | ΔH | ΔYI | |
| 1 | AP-1 | 430,000 | 86.6 | UVA-1 | 13.0 | HALS-1 | 0.4 | 4.6 | HC-1 | 3.5 | ○ | ○ | ○ | ○ | ○ | ○ |
| 2 | AP-1 | 430,000 | 86.2 | UVA-1 | 12.9 | HALS-1 | 0.9 | 4.8 | HC-1 | 3.4 | ○ | ○ | ○ | ○ | ○ | ○ |
| 3 | AP-1 | 430,000 | 86.6 | UVA-1 | 13.0 | HALS-2 | 0.4 | 5.2 | HC-1 | 3.0 | ○ | ○ | ○ | ○ | ○ | ○ |
| 4 | AP-1 | 430,000 | 86.2 | UVA-1 | 12.9 | HALS-2 | 0.9 | 4.7 | HC-1 | 3.7 | ○ | ○ | ○ | ○ | ○ | ○ |
| 5 | AP-1 | 430,000 | 86.6 | UVA-1 | 13.0 | HALS-3 | 0.4 | 4.5 | HC-1 | 3.4 | ○ | ○ | ○ | ○ | ○ | ○ |
| 6 | AP-1 | 430,000 | 87.0 | UVA-1 | 13.0 | --- | --- | 5.2 | HC-1 | 3.3 | ○ | ○ | X* | ○ | ○ | X |
| 7 | AP-2 | 95,000 | 86.6 | UVA-1/UVA-2 | 4.3/8.7 | HALTS-2 | 0.4 | 4.8 | HC-1 | 3.2 | ○ | ○ | X* | ○ | ○ | X |

*:Cracking

From the results, it can be understood that although all of the resin substrate samples having a hard coating layers obtained in Examples 1 to 5 in which the acrylic polymer, the triazine type ultraviolet absorber, and the hindered amine photostabilizer used for the acrylic primer layer, are within the ranges of the present invention, namely, being the working examples, pass the weather resistance test as the overall judgment each of the example containing no hindered amine photostabilizer (Example 6), and the example which applies the acrylic polymer having a small molecular weight, as the acrylic polymer (Example 7), being the comparative example, is judged as failed, since the cracking occurs in the entire hard coating (entire coating layer including the acrylic primer layer and the silicone type hard coating layer) in the result of the weather resistance test.

INDUSTRIAL APPLICABILITY

The resin substrate having a hard coating layer of the present invention has the high-level weather resistance in addition to the excellent abrasion resistance, so that it can be used as a window glass for a vehicle to be attached to an automobile or various transportation facilities, or a window glass for a building material to be attached to a building construction such as a house or a building.
Note that the entire disclosure of Japanese Patent Application No. 2010-037430 filed on February 23, 2010 including specification, claims, drawings and summary is incorporated herein by reference in its entirety.

## Claims

**1.** A resin substrate having a hard coating layer comprising a primer layer containing an acrylic polymer (A), as a main component, in which at least one member selected from an alkyl acrylate and an alkyl methacrylate is set as main monomer units, and further containing a triazine type ultraviolet absorber (B), and a hindered amine photostabilizer (C); and a hard coating layer formed of a cured product of a hard coating agent composition containing organo polysiloxane, sequentially laminated on at least one surface of the resin substrate,
wherein:

the acrylic polymer (A) has an acid value of 1 mg KOH/g or less, a glass transition point of from 60°C to 150°C, and a weight average molecular weight of from 200000 to 1000000;
the average of absorption coefficients of the triazine type ultraviolet absorber (B) to light in a wavelength region of from 350 nm to 380 nm is from 20 g/(mg·cm) to 100 g/(mg·cm); and
the amine moiety in the hindered amine photostabilizer (C) is capped with an alkyl group or an alkoxy group.

**2.** The resin substrate having a hard coating layer according to claim 1,
wherein the acrylic polymer (A) is a homopolymer or a copolymer formed of alkyl methacrylate having an alkyl group having 6 or less carbon atoms as the main monomer units, and has the weight average molecular weight of 400000 to 1000000.

**3.** The resin substrate having a hard coating layer according to claim 1 or 2,
wherein the content of the triazine type ultraviolet absorber (B) in the primer layer is from 1 mass% to 30 mass% to a total amount of components constituting the primer layer.

**4.** The resin substrate having a hard coating layer according to any one of claims 1 to 3,
wherein the content of the hindered amine photostabilizer (C) in the primer layer is from 0.1 mass% to 5 mass% to a total amount of components constituting the primer layer.

**5.** The resin substrate having a hard coating layer according to any one of claims 1 to 4,
wherein the organo polysiloxane is composed solely of T units and Q units, and a ratio of the number of the units is T:Q = from 70 to 100: from 30 to 0.

**6.** The resin substrate having a hard coating layer according to any one of claims 1 to 5, wherein the hard coating agent composition further contains fine silica particles.

**7.** The resin substrate having a hard coating layer according to any one of claims 1 to 6, wherein the primer layer has a thickness of from 0.5 μm to 10 μm.

**8.** The resin substrate having a hard coating layer according to any one of claims 1 to 7, wherein the hard coating layer

has a thickness of from 0.5 μm to 10 μm.

**9.** The resin substrate having a hard coating layer according to any one of claims 1 to 8, wherein the material for the resin substrate is a polycarbonate resin.

FIG. 1

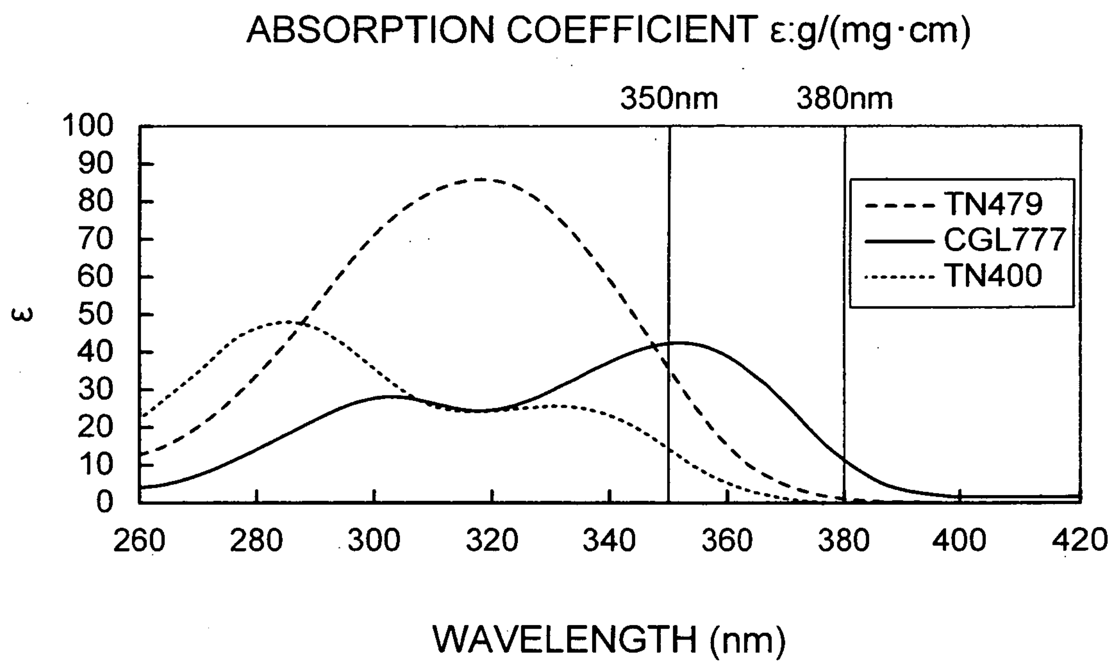
ABSORPTION COEFFICIENT ε:g/(mg·cm)
350nm
380nm
100
90
80
70
60
50
40
30
20
10
0
ε
TN479
CGL777
TN400
260
280
300
320
340
360
380
400
420
WAVELENGTH (nm)

**INTERNATIONAL SEARCH REPORT**

International application No.
PCT/JP2011/053867

A. CLASSIFICATION OF SUBJECT MATTER
*B32B27/30*(2006.01)i, *C08K5/3435*(2006.01)i, *C08K5/3492*(2006.01)i,
*C08L33/06*(2006.01)i

According to International Patent Classification (IPC) or to both national classification and IPC

B. FIELDS SEARCHED

Minimum documentation searched (classification system followed by classification symbols)
B32B1/00-43/00, B05D1/00-7/26, C08K3/00-13/08, C08L1/00-101/14,
C08J7/04-7/06

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2005-59344 A (Mitsubishi Rayon Co., Ltd.), 10 March 2005 (10.03.2005), claims 1, 3; paragraphs [0018] to [0030], [0097] (Family: none) | 1-9 |
| A | JP 2006-289932 A (Teijin Chemicals Ltd.), 26 October 2006 (26.10.2006), claim 1; paragraphs [0032], [0046], [0051] (Family: none) | 1-9 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 13 May, 2011 (13.05.11) | 24 May, 2011 (24.05.11) |
| Name and mailing address of the ISA/ Japanese Patent Office | Authorized officer |
| Facsimile No. | Telephone No. |

Form PCT/ISA/210 (second sheet) (July 2009)

**INTERNATIONAL SEARCH REPORT**

International application No.
PCT/JP2011/053867

C (Continuation). DOCUMENTS CONSIDERED TO BE RELEVANT

| Category* | Citation of document, with indication, where appropriate, of the relevant passages | Relevant to claim No. |
|---|---|---|
| A | WO 2007/105741 A1 (Teijin Chemicals Ltd.), 20 September 2007 (20.09.2007), claim 1; page 18, lines 18 to 23; page 21, lines 20 to 30; page 22, line 34 to page 23, line 5<br>& US 2009/0104447 A1<br>paragraphs [0075], [0103], [0110]; claim 1<br>& EP 1995056 A1 & CA 2644773 A<br>& KR 10-2008-0108445 A & CN 101365587 A | 1-9 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 200528795KOKAI A
- JP 200559344KOKAI A
- JP 2008535700KOHYO A
- JP 2010037430 A

### Non-patent literature cited in the description

- *Polyfile,* 2004, vol. 4, 66-70